# EUROPEAN PATENT SPECIFICATION

(11) **EP 4 409 843 B1**
(45) Date of publication and mention of the grant of the patent: **10.09.2025**
(21) Application number: 22798002.6
(22) Date of filing: 28.09.2022
(51) Int. Cl.: H04L 9/40

(54) **EXTERNAL IDENTITY PROVIDER AS A DOMAIN RESOURCE**
EXTERNER IDENTITÄTSANBIETER ALS DOMÄNENRESSOURCE
FOURNISSEUR D'IDENTITÉ EXTERNE EN TANT QUE RESSOURCE DE DOMAINE

(30) Priority: 30.09.2021 US 202163250598 P; 23.09.2022 US 202217934846
(43) Date of publication of application: 07.08.2024
(73) Proprietor: Oracle International Corporation, Redwood Shores, CA 94065 (US)
(72) Inventor: NAGARAJA, Girish, Redwood Shores, CA 94065 (US); VAN DEN DUNGEN, Martinus Petrus Lambertus, Redwood Shores, CA 94065 (US); WILSON, Greg, Redwood Shores, CA 94065 (US); COLE, Gary Philip, Redwood Shores, CA 94065 (US); EVANI, Venkata Subbarao, Redwood Shores, CA 94065 (US)
(74) Representative: Gill Jennings & Every LLP
(86) International application number: PCT/US2022/077161
(87) International publication number: WO 2023/056285

(56) References cited:
- WO-A1-2012/072098
- US-A1- 2008 021 997
- US-A1- 2019 199 723
- "3rd Generation Partnership Project; Technical Specification Group Services and System Aspects; Identity management and 3GPP security interworking; Identity management and Generic Authentication Architecture (GAA) interworking (Release 9)", 3GPP STANDARD; 3GPP TR 33.924, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V2.0.0, 15 December 2009 (2009-12-15), pages 1 - 26, XP050400926

## Description

### FIELD

The present disclosure relates to a framework for integrating two or more separate identity and access management systems in a seamless manner.

### BACKGROUND

Cloud service providers (CSP) offer services under different models including: Software-as-a-Service (SaaS), Platform-as-a-Service (PaaS), and Infrastructure-as-a-Service (IaaS) models. In the cloud environment, an identity and access management (IAM) system is generally provided by the CSP to control user access to resources provided or used by a cloud service. Typical services or functions provided by an IAM system include, without restriction, single-sign on capabilities for users, authentication and authorization services, and other identity-based services.

The resources that are protected by the IAM system can be of different types, such as compute instances, block storage volumes, virtual cloud networks (VCNs), subnets, route tables, various callable APIs, and/or internal or legacy applications. These resources include resources stored in the cloud and/or customer on-premises resources. Each resource is identified by a unique identifier that is assigned to the resource when the resource is created. In typical CSP operations, a first IAM system is provided to control user access to a first type of service e.g., IaaS. Separately, a second IAM system is provided for security and identity management for a second type of application e.g., SaaS or PaaS services. As a result, if a customer subscribes to both the first and second types of services, the customer is required to have two separate accounts (i.e., a separate account associated with each IAM system).

In order to save end-users the burden of remembering multiple sets of credentials associated with each of the separate accounts, identity federation has been proposed between the first IAM and the second IAM systems. However, the process of federating identity providers is a complex and time-consuming process, which leads to poor user experience.

Embodiments described herein address the above issues individually and collectively.

In WO 2012/072098 A1, various arrangements for providing SIP-to-HTTP and HTTP-to-SIP cross-authentication are described.

In US 2019/199723 A1, a method is disclosed in which an authentication request is received related to authentication of a user of an electronic device towards a server of a service provider.

In US 2008/021997 A1, a method is presented for performing an identity provider migration operation with respect to a user within a federated computational environment, wherein the user has a first user account at a first identity provider, a second user account at a second identity provider, and a third user account at a service provider.

In "3rd Generation Partnership Project; Technical Specification Group Services and System Aspects; Identity management and 3GPP security interworking; Identity management and Generic Authentication Architecture (GAA) interworking (Release 9)", 3GPP STANDARD; 3GPP TR 33.924, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V2.0.0, 15 December 2009, pages 1-26, XP050400926, the interworking of the operator controlled GBA with the Liberty Alliance Identity Management for enabling interworking of operator centric identity management is discussed.

### BRIEF SUMMARY

Embodiments of the present disclosure provide for generating an integrated identity and access management (IAM) system from a first IAM system and a second IAM system. In some instances, the first IAM system can correspond to an Infrastructure Identity and Access Management (IAM) of the Oracle Cloud Infrastructure (OCI), and the second IAM system may correspond to an Identity Cloud Services (IDCS) system. The integration thus provides for an integrated IAM system, where a request to perform an operation with respect to resource(s) associated with the second IAM system may be seamlessly authenticated/authorized by the integrated IAM system without requiring the first IAM system to be federated with the second IAM system.

An aspect of the present disclosure provides for a method comprising: generating an integrated identity and access management (IAM) system from a first IAM system and a second IAM system that is different than the first IAM system by: (i) creating a domain in a customer tenancy associated with the first IAM system, and (ii) embedding an identity provider of the second IAM system within the domain; receiving, by the integrated IAM system, a request from a user to perform an operation with respect to resource associated with the second IAM system; and executing the request in response to the user being successfully authenticated by the integrated IAM system.

Another aspect of the present disclosure provides for a non-transitory computer-readable medium storing specific computer-executable instructions that, when executed by a processor, cause a computer system to execute a method, the method comprising: generating an integrated identity and access management (IAM) system from a first IAM system and a second IAM system that is different than the first IAM system by: (i) creating a domain in a customer tenancy associated with the first IAM system, and (ii) embedding an identity provider of the second IAM system within the domain; receiving, by the integrated IAM system, a request from a user to perform an operation with respect to resource associated with the second IAM system; and executing the request in response to the user being successfully authenticated by the integrated IAM system.

According to one embodiment of the present disclosure, there is provided a computing device comprising: a processor; and a memory including instructions that, when executed with the processor, cause the computing device to, at least: generate an integrated identity and access management (IAM) system from a first IAM system and a second IAM system that is different than the first IAM system by: (i) creating a domain in a customer tenancy associated with the first IAM system, and (ii) embedding an identity provider of the second IAM system within the domain; receive, by the integrated IAM system, a request from a user to perform an operation with respect to resource associated with the second IAM system; and execute the request in response to the user being successfully authenticated by the integrated IAM system.

The foregoing, together with other features and embodiments will become more apparent upon referring to the following specification, claims, and accompanying drawings.

### BRIEF DESCRIPTION OF THE DRAWINGS

FIG. 1 depicts a block diagram illustrating an identity domain in accordance with various embodiments.
FIG. 2 depicts a block diagram illustrating an exemplary customer tenancy in accordance with various embodiments.
FIG. 3 depicts a block diagram illustrating an architecture of an integrated identity management system in accordance with some embodiments.
FIG. 4A depicts a flowchart illustrating a process of generating an integrated identity management system in accordance with some embodiments.
FIG. 4B depicts a flowchart illustrating a process of authorizing a user request by the integrated identity management system in accordance with some embodiments.
FIG. 5 is a block diagram illustrating one pattern for implementing a cloud infrastructure as a service system, according to at least one embodiment.
FIG. 6 is a block diagram illustrating another pattern for implementing a cloud infrastructure as a service system, according to at least one embodiment.
FIG. 7 is a block diagram illustrating another pattern for implementing a cloud infrastructure as a service system, according to at least one embodiment.
FIG. 8 is a block diagram illustrating another pattern for implementing a cloud infrastructure as a service system, according to at least one embodiment.
FIG. 9 is a block diagram illustrating an example computer system, according to at least one embodiment.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

### Introduction

A cloud service provider (CSP) may provide multiple cloud services to subscribing customers. These services may be provided under different models including a Software-as-a-Service (SaaS), Platform-as-a-Service (PaaS), an Infrastructure-as-a-Service (IaaS) model, and others.

In the cloud environment, an identity and access management (IAM) system is generally provided by the CSP to control user access to resources provided or used by a cloud service. Typical services or functions provided by the IAM system include, without restriction, single-sign on capabilities for users, authentication and authorization services, and other identity-based services.

The resources that are protected by the IAM system can be of different types, such as compute instances, block storage volumes, virtual cloud networks (VCNs), subnets, route tables, various callable APIs, internal or legacy applications, and the like. These resources include resources stored in the cloud and/or customer on-premise resources. Each resource is typically identified by a unique identifier (e.g., an ID) that is assigned to the resource when the resource is created.

A CSP may provide two or more two separate and independent IAM systems for their cloud offerings. This may be done, for example, where a IAM system (e.g., Infrastructure Identity and Access Management of OCI) may be provided for controlling access to cloud resources for IaaS applications and services provided by the CSP. Separately, a second IAM system (e.g., Identity Cloud Services (IDCS)) may be provided for security and identity management for SaaS and PaaS services provided by the CSP.

As a result of providing such two separate systems/platforms, if a customer of the CSP subscribes to both a SaaS or PaaS service and an IaaS service provided by the CSP, the customer generally has two separate accounts--one account with OCI's IAM for the IaaS subscription and a separate account with IDCS for the PaaS/SaaS subscription. Each account will have its own credentials, such as user login and/or password. The same customer thus has two separate sets of credentials for the two accounts. This results in an unsatisfactory customer experience. Additionally, having two separate identity management system also creates obstacles for interactions between SaaS/PaaS and IaaS services.

For purposes of this application, and as an example, the two platforms are referred to as IAM and IDCS. These names and terms are however not intended to be limiting in any manner. The teachings of this disclosure apply to any situation where two (or more) different identity management systems are to be integrated. The identity management systems or platforms to be integrated may be provided by one or more CSPs.

In certain embodiments, an integrated IAM system is provided that integrates the multiple identity and access management systems/platforms (e.g., IAM and IDCS platforms) in a manner that is transparent to the users or customers of the cloud services while retaining and offering the various features and functionalities offered by the two separate platforms. The integration thus provides a more seamless and enhanced user experience.

This integration, however, is technically very difficult for several reasons. The two platforms may use different procedures and protocols for implementing the identity-related functions. IAM may, for example, be an attribute-based access control (ABAC) system, also known as policy-based access control system, which defines an access control paradigm whereby access rights are granted to users through the use of policies that express a complex Boolean rule set that can evaluate many different attributes. The purpose of ABAC is to protect objects, such as data, network devices, and IT resources from unauthorized users and actions-those that do not have "approved" characteristics as defined by an organization's security policies. On the other hand IDCS may be a role-based access control (RBAC) system which is a policy-neutral access-control mechanism defined around roles and privileges. The components of RBAC, such as role-permissions, user-role and role-role relationships make it simple to perform user assignments. As yet another reason, the authentication and authorization frameworks or workflows (e.g., types of tokens that are used, different authentication frameworks, such as OAUTH) used by the two platforms may be different. This is just a small sampling of reasons why providing an integrated solution is technically very difficult.

For sake of simplicity and explanation, a first identity and access management system is considered herein to be the *IAM system* (that provides for controlling access to cloud resources, such as IaaS applications), and the second identity and access management system is considered herein to be the *IDCS* system (that provides for security and identity management for services, such as SaaS and PaaS). Typically, integration between the IAM system and the IDCS system is performed via a process referred to as *federation.* For instance, the IAM system provides a native service (referred to herein as an identity provider service), which allows users of the IAM system to federate with external identity providers (IDPs) e.g., IDCS. In operation, a user utilizes the native service (within the first identity and access management system i.e., IAM) to perform a login operation with the external IDP e.g., IDCS system. The external IDP generates a response, which is transmitted back to the IAM system. In other words, a certificate exchange is performed between the IAM and the IDCS system to validate the user. Upon the user being validated, the IAM system generates a token that contains information pertaining to IDP group(s) that the user is a member. The token is used to perform a mapping operation, which includes mapping an identifier of the user group in the external system(s) to another identifier of the user group in the IAM system. As such, the process of federating two or more separate (and independent) identity and access management systems is a cumbersome and resource intensive process, which leads to user un-satisfaction.

In what follows, there is provided a framework for integrating two separate (and independent) IAM systems in a seamless manner. As stated previously, for sake of explanation, we consider the first IAM system to correspond to OCI's IAM system, and the second IAM system to correspond to the IDCS system. However, it is appreciated that the framework to integrate two separate identity and access management systems is equally applicable to other types of identity management systems.

In the IAM system, when a customer (e.g., an organization) signs up for an account to avail services provided the IAM system, a customer tenancy is created. A *tenancy* is defined herein as a secure and isolated partition within the cloud infrastructure where the customer can create, organize, and administer cloud resources. A tenancy may include one or more compartments. Compartments allow the customer to organize and control access to its cloud resources. A compartment is a collection of related resources (such as instances, virtual cloud networks, block volumes) that can be accessed only by certain groups that have been given permission, for example, by an administrator. When the customer signs up for cloud services, the CSP creates the customer's tenancy, which is a root compartment that holds *all* of the cloud resources of the customer. The customer may create additional compartments within the tenancy (root compartment) and corresponding policies to control access to the resources in each compartment. In contrast, in the IDCS system, a unit of isolation for users and groups is referred to herein as a *stripe.* Specifically, a stripe is a container, where users or group of users can access their cloud resources.

According to some embodiments, in generating an integrated IAM system from a first IAM system and a second IAM system (that is different than the first IAM system), a resource is created in a customer tenancy associated with the first IAM system. The resource is referred to herein as a *domain.* As will be described later, the domain provides a way for customers to directly manage their IDCS stripes (in the IDCS system) within their tenancies in the IAM system. A domain encompasses the full feature set of an IDCS stripe. A policy can be established in the IAM system, which can reference IDCS stripe identities to authorize access to resources. In order to circumvent the requirement for performing a federation process as described above, embodiments of the present disclosure provide for a technique to import an identity provider (IDP) from the IDCS system and provide the imported IDP as a resource within the customer tenancy in the IAM system.

According to some embodiments, an identity domain is incorporated in each customer tenancy, and existing users and groups are moved into the identity domain. For instance, users/ groups included in a stripe in the IDCS system can be moved to an identity domain that is created in a customer's tenancy associated with OCI IAM. Further, customers are allowed to create additional domains (i.e., secondary domains). In other words, customer accounts are provisioned with a default domain and public APIs are provided to manage additional domains. As such, the customer account is no longer provisioned with the IDCS federation (i.e., the customer accounts do not need to perform the federation process) and the customers exists as single entities within the integrated IAM system.

In creating the integrated IAM system, isolation of users/groups at domain level is obtained, which allows customers to separate their users/groups. Specifically, identity domains deliver a single unified identity that can be used across all cloud offerings of the CSP. Customers can re-use the same identity across different applications (such as IaaS, PaaS, and SaaS) and create simple yet powerful authorization controls to manage all their cloud applications across their enterprise. In other words, customers have the power of a fully featured cloud identity provider for all their users and groups. Customers can also create multiple identity domains to manage and separate their IaaS, PaaS, and SaaS users and to implement a disaster recovery system.

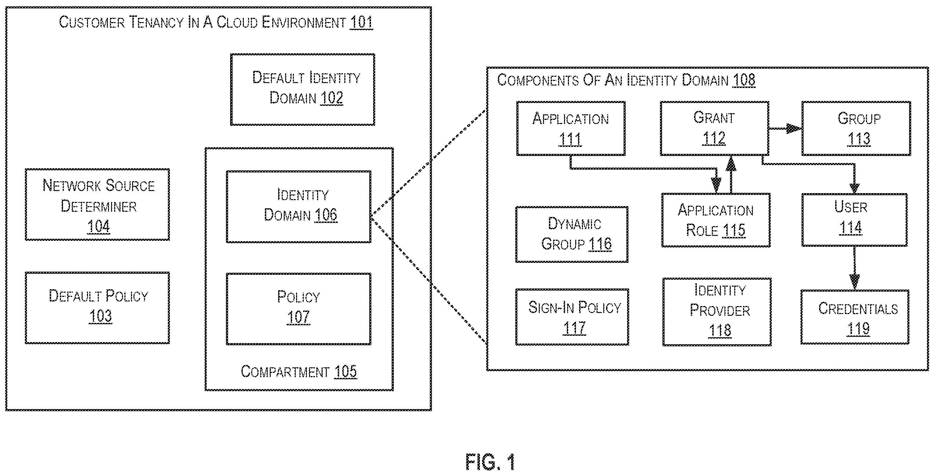

FIG. 1 depicts a block diagram illustrating an identity domain in accordance with various embodiments. According to some embodiments, an integrated identity and access management (IAM) system is generated from a first IAM system and a second IAM system. For instance, an identity provider (and its associated functionalities) that is associated with the second IAM system e.g., IDCS system, is incorporated within the first IAM system in order to generate the integrated IAM system. In order to generate the integrated IAM system, a resource is created in a customer tenancy associated with the first IAM system. The created resource is referred to herein as a domain. Further, an identity provider of the second IAM system is embedded within the domain created in the first IAM system. The domain including the embedded identity provider (of the second IAM system) is referred to herein as an identity domain. As such, the integrated IAM system provides an identity framework that can be used across both systems i.e., first IAM system and the second IAM system, without requiring the first IAM system to federate with the second IAM system.

As shown in FIG. 1, a customer tenancy 101 associated with the first IAM system includes a default identity domain 102, a network source determiner 104, a default policy 103, and a compartment 105. According to some embodiments, the compartment 105 corresponds to a logical container that is instantiated to organize and control access to resources (e.g., compute, storage, network, load balancer) that are created within that compartment. By some embodiments, the compartment 105 includes a domain (i.e., a resource) that is created to host an external identity provider. In other words, an identity provider of the second IAM system is embedded in the created domain to form the identity domain 106. Moreover, the identity domain 106 is associated with a policy 107 that can include one or more rules that govern access rights (of users included in the domain) to resources within the domain or resources that are included in the customer tenancy. It is noted that the components included in an identity domain 108 represents a comprehensive list of components that are included in the identity domain 106. Each of these components is described here in detail.

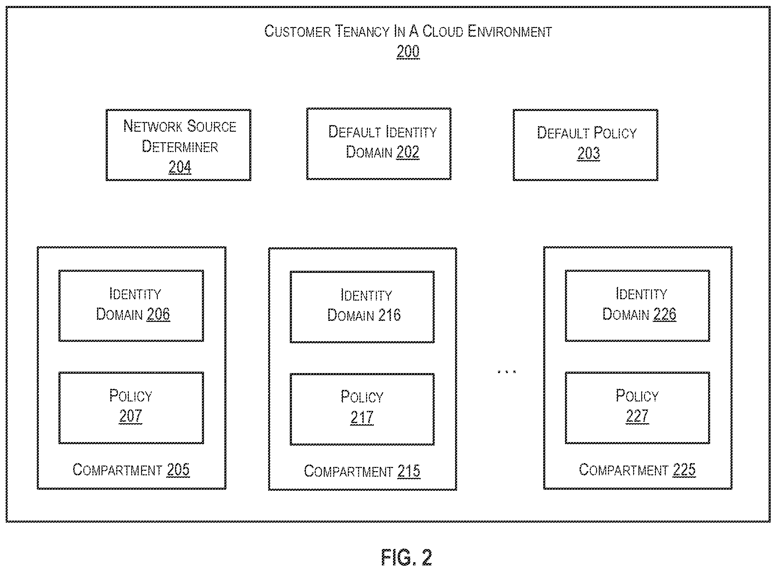

According to some embodiments, each customer tenancy 101 includes a default identity domain 102 that is provisioned when the customer tenancy is created. Initially, upon the creation of the customer tenancy 101, the default identity domain 102 includes a group comprising a single user (e.g., administrator that created the customer tenancy). The default identity domain 102 is associated with a default policy 103. The default policy 103 allows the user (e.g., the administrator included in the default identity domain 102) complete access to all resources within the customer tenancy 101. It is appreciated that each of the default identity domain 102 as well as the default policy 103 may include other additional information pertaining to users, access rights, etc. Details regarding the other additional information is described later with reference to FIG. 2.

Included in the customer tenancy 101 is a network source determiner 104. The network source determiner 104 is configured to qualify a source that issues a request directed to the customer tenancy 101. In other words, the network source determiner 104 verifies information associated with an entity (e.g., user) that issues a request, and grants access to the user based on information associated with the user satisfying some conditions e.g., IP address of the request originates from a set of predetermined IP addresses. It is noted that the policy 107 included in a compartment of the customer tenancy 101 can reference the network source determiner 104 in processing requests directed to the compartment 105.

As shown in FIG. 1, the components included in the identity domain 108 comprise an application 111, a grant module 112, a user group 113, users 114, an application role 115, a dynamic group 116, a sign-in policy 117, an identity provider 118, and a set of credentials 119. It is appreciated that the components 108 belong to an identity provider of a second IAM system (e.g., Azure active directory instance or Okta identity provider instance) that are now incorporated within a domain in the customer tenancy of the first IAM system. The identity provider 118 provisions for creation of users 114 or groups of users 113, management of user credentials 119, and allows access to the users (or group of users) to resources of a cloud infrastructure.

According to some embodiments, an application 111 e.g., a web application, can be constructed and further registered with the identity domain 106 i.e., the application 111 relies on the identity domain 106 for authorization and authentication requirements. The application 111 can include various application roles 115 (e.g., a first role with permissions to only read operations, a second role with permissions to modify aspects of the application) which can be maintained in the grant module 112. Such roles can be monitored and assigned to the different users with respect to the application by the identity domain 106.

By some embodiments, resources included in a cloud infrastructure may include resources, such as compute instances, block storage volumes, virtual cloud networks (VCNs), subnets, and/or route tables. Each of the resources may be assigned a unique credential. Such a credential associated with a resource is referred to herein as a resource principal or an instance principal. A group of such resource (or instance) principals is referred to herein as a dynamic group 116. It is appreciated that the dynamic group 116 provides for grouping of resources (e.g., based on some resource attribute matching policy) as principal actors in a manner similar to grouping users into user groups. The dynamic group 116 may be allocated to the application 111. By some embodiments, the sign-in policy 117 may establish different sign-in rules for different users based on a location of the users i.e., a network source of the user. For instance, one sign-in rule may require users to perform a multi-factor authentication in order to access resource(s) in a customer tenancy based on network source of user (e.g., IP address) from which a request to access the customer tenancy originiates.

In this manner, by importing the identity provider of a second IAM system (e.g., IDCS) and embedding it within a domain in a customer tenancy associated with a first IAM system, provides for an integrated IAM system that can be used across both systems. Thus, rather than having an IAM system (e.g., the first IAM system) federate with identity providers of different systems (e.g., second IAM system), aspects of the present disclosure provide for a mechanism to generate an integrated IAM system to circumvent the previously required federation process in order to enable user(s) access to resources provided by another system.

Turning now to FIG. 2, there is depicted a block diagram illustrating an exemplary customer tenancy in accordance with various embodiments. As shown in FIG. 2, the customer tenancy 200 includes a default identity domain 102, a default policy 203, a network source determiner 204, and a plurality of compartments e.g., compartments 205, 215, and 225. The default identity domain 202 is provisioned when the customer tenancy 200 is created. Initially, upon the creation of the customer tenancy 200, the default identity domain 202 includes a group comprising a single user (e.g., administrator that created the customer tenancy). The default identity domain 202 is associated with a default policy 203. The default policy 203 allows the user (e.g., the administrator included in the default identity domain 202) complete access to all resources within the customer tenancy 101. As stated previously, the default identity domain (as well as the default policy) may include additional information. For instance, according to some embodiments, upon the creation of the customer tenancy 200, one or more other users may be added to the default identity domain 202. In a similar manner, various new policies may be included in the default policy 203, which permit user(s) in other domains access to resources in the customer tenancy.

According to some embodiment, the integrated IAM system provisions for creation of separate domains within a customer tenancy for managing users of the customers. For example, as shown in FIG. 2, the customer tenancy 200 includes a plurality of compartments, where each compartment includes an identity domain and a policy associated thereof. For instance, compartment 205 includes an identity domain 206 and policy 207, whereas compartment 215 includes an identity domain 216 and policy 217, and compartment 225 includes an identity domain 226 and policy 227. It is noted that the configuration of the compartments as depicted in FIG. 2 is in no way limiting the scope of the present disclosure. Rather modifications to the configurations are well within the scope of the present disclosure. For instance, in a particular compartment (e.g. compartment 205), one is not limited to having a single identity domain (i.e., identity domain 206) in the compartment. Rather, the compartment can include multiple identity domains. For example, one can create two (or more) domains in a compartment, where users in each of those domains can have different access rights with respect to resources within those domains or other resources in the customer tenancy 200.

Additionally, it is appreciated that each identity provider of a plurality of identity providers that the first IAM system interacts with, can be imported and provided as a resource with a domain (included in a compartment) within the customer's tenancy 200. In this manner, rather than the first IAM system federating with identity providers (IDPs) of different types e.g., third party IDPs, the various IDPs can be imported and provided as a resource within the customer tenancy. In this manner, the first IAM system can circumvent the need to federate individually with the different identity providers.

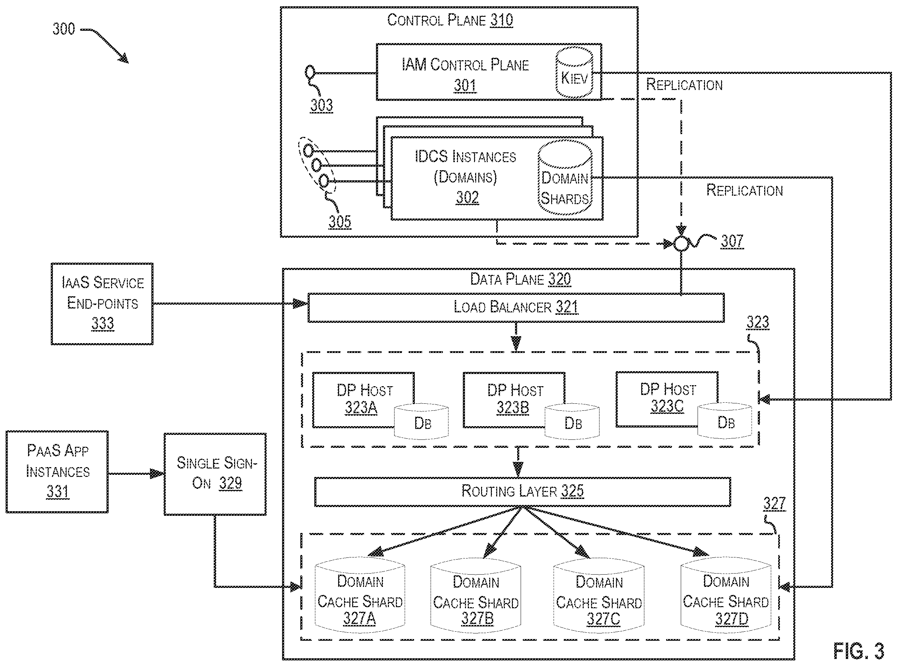

FIG. 3 depicts a block diagram illustrating an architecture of an integrated IAM system in accordance with some embodiments. The architecture of the integrated IAM system includes a control plane 310 and a data plane 320. The control plane 310 includes a first end-point 303 associated with an IAM control plane 301, and a plurality of second end-points 305 that are associated with IDCS instances 302 (i.e., corresponding to domains created in the customer tenancy). It is appreciated that the IAM control plane 301 includes a key-value database (e.g., Kiev DB), and the IDCS instances 302 are associated with domain shards. The data plane 320 includes a load balancer 325, a plurality of data plane hosts 323, a routing layer 325 and a plurality of domain cache shards 327. The plurality of data plane hosts 323 include data plane hosts 323A, 323B, and 323C. Each data plane host is associated with corresponding database (DB). The plurality of domain cache shards 327 includes domain cache shards 327A, 327B, 327C, and 327D. It is noted that the number of data plane hosts as well as the number of domain cache shards as depicted in FIG. 3 is for illustrative purposes only and does not limit the scope of the present disclosure. There may be a higher or lower number of data plane hosts as well as domain cache shards than that depicted in FIG. 3.

As shown in FIG. 3, information from each of the Kiev DB and the domain shards is replicated to respective databases included in the dataplane 320. By some embodiments, information included in the domain shards (in the control plane) is replicated and stored in the domain cache shards in the dataplane 320. Specifically, in one implementation, user information included in the domain shards may be partitioned into several portions, and each portion may be stored in a cache (i.e., domain cache shard) in the dataplane 320.

According to some embodiments, the first end-point 303 associated with the IAM control plane 301 is configured to receive requests pertaining to the creation of new domains in a customer tenancy. Once a domain is created in the customer tenancy, an end-point for the newly constructed domain is added to the plurality of second end-points 305 i.e., each domain has a corresponding end-point (one of the plurality of second end-points 305) in the control plane 310. Requests pertaining to operations to be performed with respect to a domain are directed to the corresponding second-end-point of the domain in the control plane 310.

By some embodiments, when a request issued by a user is directed to a particular second end-point, an attempt is initially made to authorize the user issuing the request by the corresponding domain i.e., the domain 302. Specifically, if the user issuing the request belongs to a group of users associated with the domain, then the user may authorized by the control plane 310 i.e., by the corresponding domain 302 to which the user belongs. However, if the user issuing the request belongs to a group that is not included in the domain i.e., the user belongs to another domain, then the request is forwarded by the control plane 310 to an end-point 307 associated with the data plane 320.

Upon the request being forwarded to the end-point 307, the load balancer 321 of the data plane 320 selects one dataplane host to process the request. It is appreciated that the load balancer 321 may select one of the data plane host (e.g., DP 323A) in a manner such that the traffic load (i.e., requests processed by the dataplane 320) is distributed evenly between the data plane hosts. In processing the request forwarded by the control plane, a data plane host (E.g., DP 323A) communicates with the routing layer 325 to obtain necessary information pertaining to the user from one of the domain cache shards. By some embodiments, the routing layer may maintain mapping information that maps users and cache IDs (corresponding to the domain cache shard where the user information is stored). In this manner, the data plane host in collaboration with the routing layer 325 obtains the relevant user information (e.g., policies related to the user) for authorizing the user. The architecture of the integrated IAM system further includes an IaaS service end-point 333, which is configured to receive authorization requests with respect to IaaS services. It is noted that such requests are directed to the data plane 320 for authorization purposes. Furthermore, PaaS application instances 331 (e.g., application 111 of FIG. 1) communicate with a single sign-on module 329 for authorization/authentication purposes. Specifically, the single sign-on module 329 retrieves the desired user information from one of the domain shards included in the data plane 320 to authorize a user that utilizes/initiates the application instance.

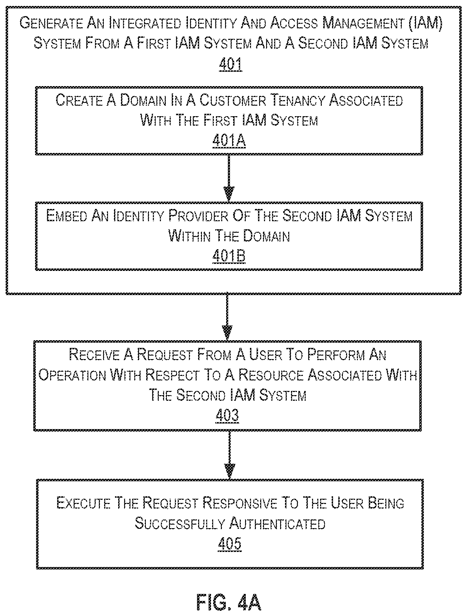

FIG. 4A depicts a flowchart illustrating steps performed in generating an integrated identity and access management (IAM) system in accordance with some embodiments. The processing depicted in FIG. 4A may be implemented in software (e.g., code, instructions, program) executed by one or more processing units (e.g., processors, cores) of the respective systems, using hardware or combinations thereof. The software may be stored on a non-transitory storage medium (e.g., on a memory device). The method presented in FIG. 4A and described below is intended to be illustrative and non-limiting. Although FIG. 4A depicts the various processing steps occurring in a particular sequence or order, this is not intended to be limiting. In certain alternative embodiments, the processing may be performed in some different order or some steps may also be performed in parallel. For the sake of illustration, the steps of the flowchart of FIG. 4A are described with reference to generating the intergrated IAM system from a first IAM (e.g., OCI's IAM) system and a second IAM system (e.g., IDCS).

The process commences in step 401, where an integrated IAM system is generated from a first IAM system and a second IAM system. Note that the second IAM system is different than the first IAM system. The steps included in generating the integrated IAM system include two sub-steps labeled as 401A and 401B, respectively. In step 401A, a domain (i.e., a resource) is created in a customer tenancy associated with the first IAM system. Further, in step 401B, an identity provider of the second IAM system is embedded within the domain created in step 401A. By embedding the identity provider of the second IAM system in the domain (included in the customer tenancy) this leads to the creation of an identity domain (e.g., identity domain 106 of FIG. 1). Doing so, provides an identity framework that can be used across both systems i.e., first IAM system and the second IAM system, without requiring the first IAM system to federate with the second IAM system.

The process then moves to step 403, where the integrated IAM system receives a request from a user to perform an operation with respect to a resource associated with the second IAM system. By some embodiments, the request may be a create, read, update, or delete (CRUD) operation. Thereafter, the process moves to step 405, where the request is executed in response to the user being successfully authenticated by the integrated IAM system i.e., determining whether the user has sufficient privileges to perform the operation.

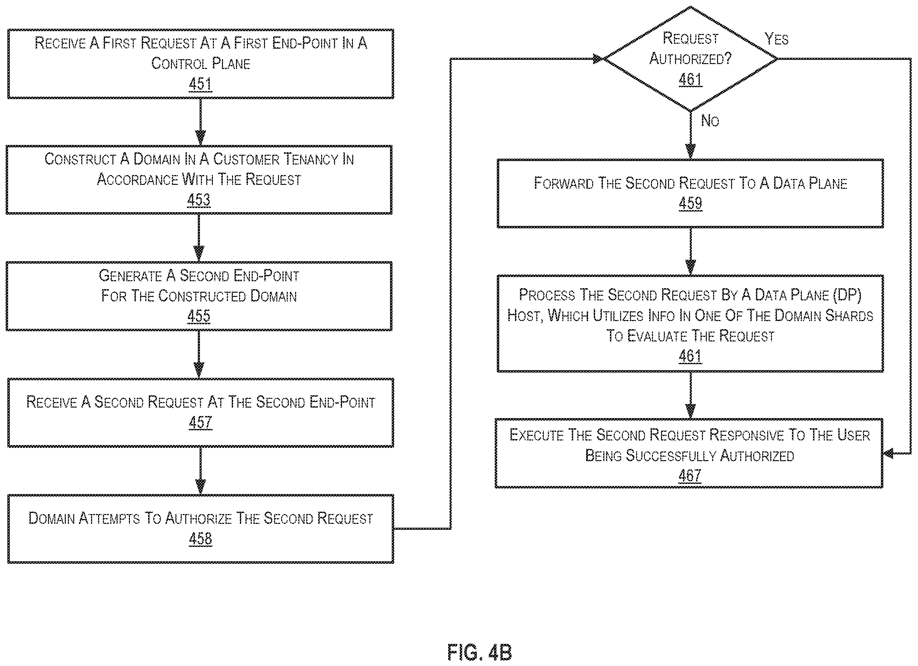

FIG. 4B depicts a flowchart illustrating a process of authorizing a user request by the integrated identity management system in accordance with some embodiments. The processing depicted in FIG. 4B may be implemented in software (e.g., code, instructions, program) executed by one or more processing units (e.g., processors, cores) of the respective systems, using hardware or combinations thereof. The software may be stored on a non-transitory storage medium (e.g., on a memory device). The method presented in FIG. 4B and described below is intended to be illustrative and non-limiting. Although FIG. 4B depicts the various processing steps occurring in a particular sequence or order, this is not intended to be limiting. In certain alternative embodiments, the processing may be performed in some different order or some steps may also be performed in parallel.

The process commences in step 451, where the integrated IAM system receives a first request at a first end-point in the control plane. The first request corresponds to a request issued by a user to create a new domain in a customer tenancy. Referring to FIG. 3, the first request may be received at end-point 303. In step 453, a domain in created in the customer tenancy in accordance with the request.

In step 455, a second end-point is generated in the control plane for the domain created in step 453. Referring to FIG. 3, a new end-point (i.e., second end-point corresponding to the newly created domain) is generated and added to the plurality of end-points 305. In other words, each domain in the customer's tenancy has a corresponding end-point in the control plane, such that requests related to the domain are directed to the corresponding end-point. Thereafter, in step 457, a second request is received at the second end-point.

In step 458, the domain corresponding to the second end-point attempts to authorize the user that issued the second request. According to some embodiments, if the user that issued the second request belongs to a group of users included in the domain, then the user may be authorized by the domain itself. However, if the user (issuing the second request) is outside the domain, then the second request is forwarded to the data plane for authorization purposes. Further, in step 461, a determination is made as to whether the second request was authorized successfully. If the response to the query is affirmative, then the process moves to step 467, else the process moves to step 459.

In step 459, the second request is forwarded to the data plane for authorization purposes. Thereafter, in step 461, the data plane of the integrated IAM system processes the second request. Specifically, referring to FIG. 3, one of the data plane host (e.g., data plane host 323A) communicates with the routing layer 325 to obtain information (of the user) from one of the domain cache shards (i.e., domain cache shards 327A-327D). Based on the information obtained from the one of the domain cache shards, the data plane host evaluates the second request. Further, in step 467, the integrated IAM system executes the second request in response to the user (that issued the second request) being successfully authorized.

### Example Infrastructure as Service Architectures

As noted above, infrastructure as a service (IaaS) is one particular type of cloud computing. IaaS can be configured to provide virtualized computing resources over a public network (e.g., the Internet). In an IaaS model, a cloud computing provider can host the infrastructure components (e.g., servers, storage devices, network nodes (e.g., hardware), deployment software, platform virtualization (e.g., a hypervisor layer), or the like). In some cases, an IaaS provider may also supply a variety of services to accompany those infrastructure components (e.g., billing, monitoring, logging, security, load balancing and clustering). Thus, as these services may be policy-driven, IaaS users may be able to implement policies to drive load balancing to maintain application availability and performance.

In some instances, IaaS customers may access resources and services through a wide area network (WAN), such as the Internet, and can use the cloud provider's services to install the remaining elements of an application stack. For example, the user can log in to the IaaS platform to create virtual machines (VMs), install operating systems (OSs) on each VM, deploy middleware, such as databases, create storage buckets for workloads and backups, and even install enterprise software into that VM. Customers can then use the provider's services to perform various functions, including balancing network traffic, troubleshooting application issues, monitoring performance, managing disaster recovery, etc.

In most cases, a cloud computing model will require the participation of a cloud provider. The cloud provider may, but need not be, a third-party service that specializes in providing (e.g., offering, renting, selling) IaaS. An entity might also opt to deploy a private cloud, becoming its own provider of infrastructure services.

In some examples, IaaS deployment is the process of putting a new application, or a new version of an application, onto a prepared application server or the like. It may also include the process of preparing the server (e.g., installing libraries, daemons). This is often managed by the cloud provider, below the hypervisor layer (e.g., the servers, storage, network hardware, and virtualization). Thus, the customer may be responsible for handling (OS), middleware, and/or application deployment (e.g., on self-service virtual machines (e.g., that can be spun up on demand) or the like.

In some examples, IaaS provisioning may refer to acquiring computers or virtual hosts for use, and even installing needed libraries or services on them. In most cases, deployment does not include provisioning, and the provisioning may need to be performed first.

In some cases, there are two different problems for IaaS provisioning. First, there is the initial challenge of provisioning the initial set of infrastructure before anything is running. Second, there is the challenge of evolving the existing infrastructure (e.g., adding new services, changing services, removing services) once everything has been provisioned. In some cases, these two challenges may be addressed by enabling the configuration of the infrastructure to be defined declaratively. In other words, the infrastructure (e.g., what components are needed and how they interact) can be defined by one or more configuration files. Thus, the overall topology of the infrastructure (e.g., what resources depend on which, and how they each work together) can be described declaratively. In some instances, once the topology is defined, a workflow can be generated that creates and/or manages the different components described in the configuration files.

In some examples, an infrastructure may have many interconnected elements. For example, there may be one or more virtual private clouds (VPCs) (e.g., a potentially on-demand pool of configurable and/or shared computing resources), also known as a core network. In some examples, there may also be one or more security group rules provisioned to define how the security of the network will be set up and one or more virtual machines (VMs). Other infrastructure elements may also be provisioned, such as a load balancer, a database, or the like. As more and more infrastructure elements are desired and/or added, the infrastructure may incrementally evolve.

In some instances, continuous deployment techniques may be employed to enable deployment of infrastructure code across various virtual computing environments. Additionally, the described techniques can enable infrastructure management within these environments. In some examples, service teams can write code that is desired to be deployed to one or more, but often many, different production environments (e.g., across various different geographic locations, sometimes spanning the entire world). However, in some examples, the infrastructure on which the code will be deployed must first be set up. In some instances, the provisioning can be done manually, a provisioning tool may be utilized to provision the resources, and/or deployment tools may be utilized to deploy the code once the infrastructure is provisioned.

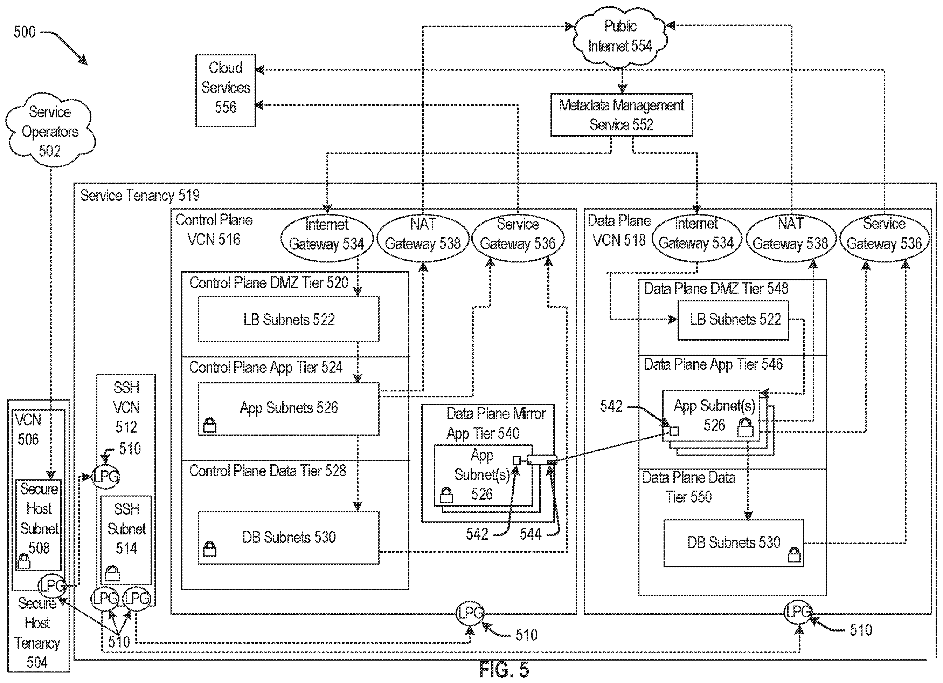

FIG. 5 is a block diagram 500 illustrating an example pattern of an IaaS architecture, according to at least one embodiment. Service operators 502 can be communicatively coupled to a secure host tenancy 504 that can include a virtual cloud network (VCN) 506 and a secure host subnet 508. In some examples, the service operators 502 may be using one or more client computing devices, which may be portable handheld devices (e.g., an iPhone^{®}, cellular telephone, an iPad^{®}, computing tablet, a personal digital assistant (PDA)) or wearable devices (e.g., a Google Glass^{®} head mounted display), running software, such as Microsoft Windows Mobile^{®}, and/or a variety of mobile operating systems, such as iOS, Windows Phone, Android, BlackBerry 8, Palm OS, and the like, and being Internet, e-mail, short message service (SMS), Blackberry^{®}, or other communication protocol enabled. Alternatively, the client computing devices can be general purpose personal computers including, by way of example, personal computers and/or laptop computers running various versions of Microsoft Windows^{®}, Apple Macintosh^{®}, and/or Linux operating systems. The client computing devices can be workstation computers running any of a variety of commercially-available UNIX^{®} or UNIX-like operating systems, including without limitation the variety of GNU/Linux operating systems, such as Google Chrome OS. Alternatively, or in addition, client computing devices may be any other electronic device, such as a thin-client computer, an Internet-enabled gaming system (e.g., a Microsoft Xbox gaming console with or without a Kinect^{®} gesture input device), and/or a personal messaging device, capable of communicating over a network that can access the VCN 506 and/or the Internet.

The VCN 506 can include a local peering gateway (LPG) 510 that can be communicatively coupled to a secure shell (SSH) VCN 512 via an LPG 510 contained in the SSH VCN 512. The SSH VCN 512 can include an SSH subnet 514, and the SSH VCN 512 can be communicatively coupled to a control plane VCN 516 via the LPG 510 contained in the control plane VCN 516. Also, the SSH VCN 512 can be communicatively coupled to a data plane VCN 518 via an LPG 510. The control plane VCN 516 and the data plane VCN 518 can be contained in a service tenancy 519 that can be owned and/or operated by the IaaS provider.

The control plane VCN 516 can include a control plane demilitarized zone (DMZ) tier 520 that acts as a perimeter network (e.g., portions of a corporate network between the corporate intranet and external networks). The DMZ-based servers may have restricted responsibilities and help keep security breaches contained. Additionally, the DMZ tier 520 can include one or more load balancer (LB) subnet(s) 522, a control plane app tier 524 that can include app subnet(s) 526, a control plane data tier 528 that can include database (DB) subnet(s) 530 (e.g., frontend DB subnet(s) and/or backend DB subnet(s)). The LB subnet(s) 522 contained in the control plane DMZ tier 520 can be communicatively coupled to the app subnet(s) 526 contained in the control plane app tier 524 and an Internet gateway 534 that can be contained in the control plane VCN 516, and the app subnet(s) 526 can be communicatively coupled to the DB subnet(s) 530 contained in the control plane data tier 528 and a service gateway 536 and a network address translation (NAT) gateway 538. The control plane VCN 516 can include the service gateway 536 and the NAT gateway 538.

The control plane VCN 516 can include a data plane mirror app tier 540 that can include app subnet(s) 526. The app subnet(s) 526 contained in the data plane mirror app tier 540 can include a virtual network interface controller (VNIC) 542 that can execute a compute instance 544. The compute instance 544 can communicatively couple the app subnet(s) 526 of the data plane mirror app tier 540 to app subnet(s) 526 that can be contained in a data plane app tier 546.

The data plane VCN 518 can include the data plane app tier 546, a data plane DMZ tier 548, and a data plane data tier 550. The data plane DMZ tier 548 can include LB subnet(s) 522 that can be communicatively coupled to the app subnet(s) 526 of the data plane app tier 546 and the Internet gateway 534 of the data plane VCN 518. The app subnet(s) 526 can be communicatively coupled to the service gateway 536 of the data plane VCN 518 and the NAT gateway 538 of the data plane VCN 518. The data plane data tier 550 can also include the DB subnet(s) 530 that can be communicatively coupled to the app subnet(s) 526 of the data plane app tier 546.

The Internet gateway 534 of the control plane VCN 516 and of the data plane VCN 518 can be communicatively coupled to a metadata management service 552 that can be communicatively coupled to public Internet 554. Public Internet 554 can be communicatively coupled to the NAT gateway 538 of the control plane VCN 516 and of the data plane VCN 518. The service gateway 536 of the control plane VCN 516 and of the data plane VCN 518 can be communicatively couple to cloud services 556.

In some examples, the service gateway 536 of the control plane VCN 516 or of the data plane VCN 518 can make application programming interface (API) calls to cloud services 556 without going through public Internet 554. The API calls to cloud services 556 from the service gateway 536 can be one-way: the service gateway 536 can make API calls to cloud services 556, and cloud services 556 can send requested data to the service gateway 536. But, cloud services 556 may not initiate API calls to the service gateway 536.

In some examples, the secure host tenancy 504 can be directly connected to the service tenancy 519, which may be otherwise isolated. The secure host subnet 508 can communicate with the SSH subnet 514 through an LPG 510 that may enable two-way communication over an otherwise isolated system. Connecting the secure host subnet 508 to the SSH subnet 514 may give the secure host subnet 508 access to other entities within the service tenancy 519.

The control plane VCN 516 may allow users of the service tenancy 519 to set up or otherwise provision desired resources. Desired resources provisioned in the control plane VCN 516 may be deployed or otherwise used in the data plane VCN 518. In some examples, the control plane VCN 516 can be isolated from the data plane VCN 518, and the data plane mirror app tier 540 of the control plane VCN 516 can communicate with the data plane app tier 546 of the data plane VCN 518 via VNICs 542 that can be contained in the data plane mirror app tier 540 and the data plane app tier 546.

In some examples, users of the system, or customers, can make requests, for example create, read, update, or delete (CRUD) operations, through public Internet 554 that can communicate the requests to the metadata management service 552. The metadata management service 552 can communicate the request to the control plane VCN 516 through the Internet gateway 534. The request can be received by the LB subnet(s) 522 contained in the control plane DMZ tier 520. The LB subnet(s) 522 may determine that the request is valid, and in response to this determination, the LB subnet(s) 522 can transmit the request to app subnet(s) 526 contained in the control plane app tier 524. If the request is validated and requires a call to public Internet 554, the call to public Internet 554 may be transmitted to the NAT gateway 538 that can make the call to public Internet 554. Memory that may be desired to be stored by the request can be stored in the DB subnet(s) 530.

In some examples, the data plane mirror app tier 540 can facilitate direct communication between the control plane VCN 516 and the data plane VCN 518. For example, changes, updates, or other suitable modifications to configuration may be desired to be applied to the resources contained in the data plane VCN 518. Via a VNIC 542, the control plane VCN 516 can directly communicate with, and can thereby execute the changes, updates, or other suitable modifications to configuration to, resources contained in the data plane VCN 518.

In some embodiments, the control plane VCN 516 and the data plane VCN 518 can be contained in the service tenancy 519. In this case, the user, or the customer, of the system may not own or operate either the control plane VCN 516 or the data plane VCN 518. Instead, the IaaS provider may own or operate the control plane VCN 516 and the data plane VCN 518, both of which may be contained in the service tenancy 519. This embodiment can enable isolation of networks that may prevent users or customers from interacting with other users', or other customers', resources. Also, this embodiment may allow users or customers of the system to store databases privately without needing to rely on public Internet 654, which may not have a desired level of security, for storage.

In other embodiments, the LB subnet(s) 522 contained in the control plane VCN 516 can be configured to receive a signal from the service gateway 536. In this embodiment, the control plane VCN 516 and the data plane VCN 518 may be configured to be called by a customer of the IaaS provider without calling public Internet 554. Customers of the IaaS provider may desire this embodiment since database(s) that the customers use may be controlled by the IaaS provider and may be stored on the service tenancy 519, which may be isolated from public Internet 554.

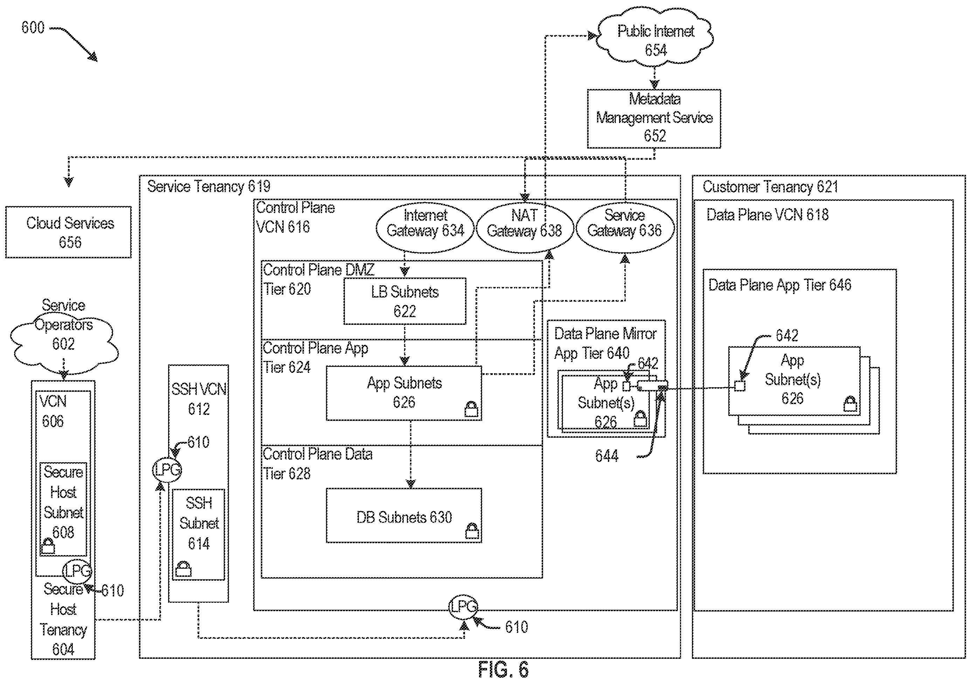

FIG. 6 is a block diagram 600 illustrating another example pattern of an IaaS architecture, according to at least one embodiment. Service operators 602 (e.g. service operators 502 of FIG. 5) can be communicatively coupled to a secure host tenancy 604 (e.g. the secure host tenancy 504 of FIG. 5) that can include a virtual cloud network (VCN) 606 (e.g. the VCN 506 of FIG. 5) and a secure host subnet 608 (e.g. the secure host subnet 508 of FIG. 5). The VCN 606 can include a local peering gateway (LPG) 610 (e.g. the LPG 510 of FIG. 5) that can be communicatively coupled to a secure shell (SSH) VCN 612 (e.g. the SSH VCN 512 of FIG. 5) via an LPG 510 contained in the SSH VCN 612. The SSH VCN 612 can include an SSH subnet 614 (e.g. the SSH subnet 514 of FIG. 5), and the SSH VCN 612 can be communicatively coupled to a control plane VCN 616 (e.g. the control plane VCN 516 of FIG. 5) via an LPG 610 contained in the control plane VCN 616. The control plane VCN 616 can be contained in a service tenancy 619 (e.g. the service tenancy 519 of FIG. 5), and the data plane VCN 618 (e.g. the data plane VCN 518 of FIG. 5) can be contained in a customer tenancy 621 that may be owned or operated by users, or customers, of the system.

The control plane VCN 616 can include a control plane DMZ tier 620 (e.g. the control plane DMZ tier 520 of FIG. 5) that can include LB subnet(s) 622 (e.g. LB subnet(s) 522 of FIG. 5), a control plane app tier 624 (e.g. the control plane app tier 524 of FIG. 5) that can include app subnet(s) 626 (e.g. app subnet(s) 526 of FIG. 5), a control plane data tier 628 (e.g. the control plane data tier 528 of FIG. 5) that can include database (DB) subnet(s) 630 (e.g. similar to DB subnet(s) 530 of FIG. 5). The LB subnet(s) 622 contained in the control plane DMZ tier 620 can be communicatively coupled to the app subnet(s) 626 contained in the control plane app tier 624 and an Internet gateway 634 (e.g. the Internet gateway 534 of FIG. 5) that can be contained in the control plane VCN 616, and the app subnet(s) 626 can be communicatively coupled to the DB subnet(s) 630 contained in the control plane data tier 628 and a service gateway 636 (e.g. the service gateway of FIG. 5) and a network address translation (NAT) gateway 638 (e.g. the NAT gateway 538 of FIG. 5). The control plane VCN 616 can include the service gateway 636 and the NAT gateway 638.

The control plane VCN 616 can include a data plane mirror app tier 640 (e.g. the data plane mirror app tier 540 of FIG. 5) that can include app subnet(s) 626. The app subnet(s) 626 contained in the data plane mirror app tier 640 can include a virtual network interface controller (VNIC) 642 (e.g. the VNIC of 542) that can execute a compute instance 644 (e.g. similar to the compute instance 544 of FIG. 5). The compute instance 644 can facilitate communication between the app subnet(s) 626 of the data plane mirror app tier 640 and the app subnet(s) 626 that can be contained in a data plane app tier 646 (e.g. the data plane app tier 546 of FIG. 5) via the VNIC 642 contained in the data plane mirror app tier 640 and the VNIC 642 contained in the data plane app tier 646.

The Internet gateway 634 contained in the control plane VCN 616 can be communicatively coupled to a metadata management service 652 (e.g. the metadata management service 552 of FIG. 5) that can be communicatively coupled to public Internet 654 (e.g. public Internet 554 of FIG. 5). Public Internet 654 can be communicatively coupled to the NAT gateway 638 contained in the control plane VCN 616. The service gateway 636 contained in the control plane VCN 616 can be communicatively couple to cloud services 656 (e.g. cloud services 556 of FIG. 5).

In some examples, the data plane VCN 618 can be contained in the customer tenancy 621. In this case, the IaaS provider may provide the control plane VCN 616 for each customer, and the IaaS provider may, for each customer, set up a unique compute instance 644 that is contained in the service tenancy 619. Each compute instance 644 may allow communication between the control plane VCN 616, contained in the service tenancy 619, and the data plane VCN 618 that is contained in the customer tenancy 621. The compute instance 644 may allow resources, that are provisioned in the control plane VCN 616 that is contained in the service tenancy 619, to be deployed or otherwise used in the data plane VCN 618 that is contained in the customer tenancy 621.

In other examples, the customer of the IaaS provider may have databases that live in the customer tenancy 621. In this example, the control plane VCN 616 can include the data plane mirror app tier 640 that can include app subnet(s) 626. The data plane mirror app tier 640 can reside in the data plane VCN 618, but the data plane mirror app tier 640 may not live in the data plane VCN 618. That is, the data plane mirror app tier 640 may have access to the customer tenancy 621, but the data plane mirror app tier 640 may not exist in the data plane VCN 618 or be owned or operated by the customer of the IaaS provider. The data plane mirror app tier 640 may be configured to make calls to the data plane VCN 618 but may not be configured to make calls to any entity contained in the control plane VCN 616. The customer may desire to deploy or otherwise use resources in the data plane VCN 618 that are provisioned in the control plane VCN 616, and the data plane mirror app tier 640 can facilitate the desired deployment, or other usage of resources, of the customer.

In some embodiments, the customer of the IaaS provider can apply filters to the data plane VCN 618. In this embodiment, the customer can determine what the data plane VCN 618 can access, and the customer may restrict access to public Internet 654 from the data plane VCN 618. The IaaS provider may not be able to apply filters or otherwise control access of the data plane VCN 618 to any outside networks or databases. Applying filters and controls by the customer onto the data plane VCN 618, contained in the customer tenancy 621, can help isolate the data plane VCN 618 from other customers and from public Internet 654.

In some embodiments, cloud services 656 can be called by the service gateway 636 to access services that may not exist on public Internet 654, on the control plane VCN 616, or on the data plane VCN 618. The connection between cloud services 656 and the control plane VCN 616 or the data plane VCN 618 may not be live or continuous. Cloud services 656 may exist on a different network owned or operated by the IaaS provider. Cloud services 656 may be configured to receive calls from the service gateway 636 and may be configured to not receive calls from public Internet 654. Some cloud services 656 may be isolated from other cloud services 656, and the control plane VCN 616 may be isolated from cloud services 656 that may not be in the same region as the control plane VCN 616. For example, the control plane VCN 616 may be located in "Region 1," and cloud service "Deployment 6," may be located in Region 1 and in "Region 2." If a call to Deployment 6 is made by the service gateway 636 contained in the control plane VCN 616 located in Region 1, the call may be transmitted to Deployment 6 in Region 1. In this example, the control plane VCN 616, or Deployment 6 in Region 1, may not be communicatively coupled to, or otherwise in communication with, Deployment 6 in Region 2.

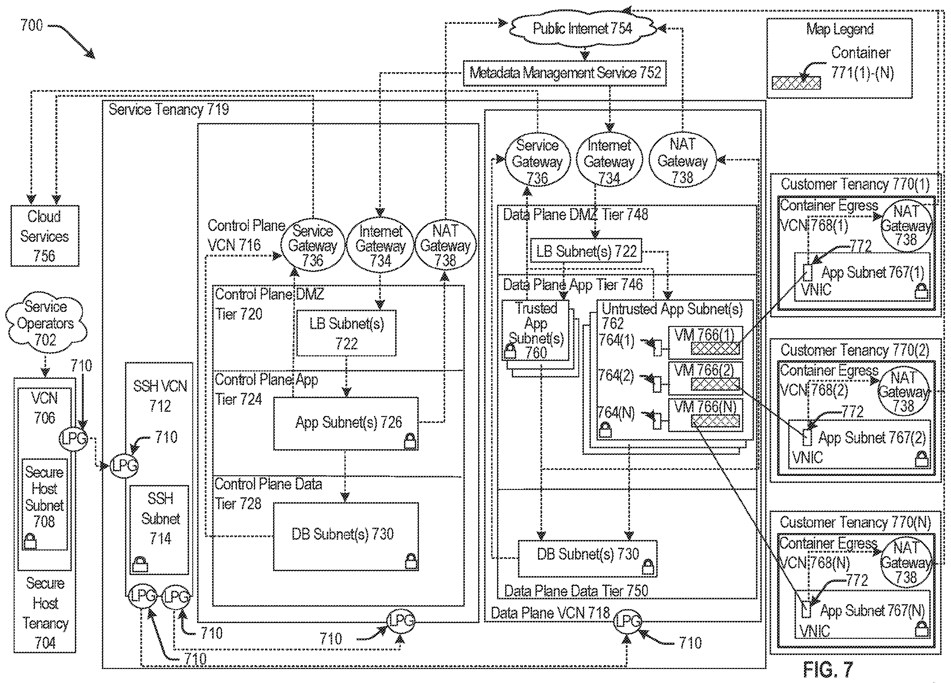

FIG. 7 is a block diagram 700 illustrating another example pattern of an IaaS architecture, according to at least one embodiment. Service operators 702 (e.g. service operators 502 of FIG. 5) can be communicatively coupled to a secure host tenancy 704 (e.g. the secure host tenancy 504 of FIG. 5) that can include a virtual cloud network (VCN) 706 (e.g. the VCN 506 of FIG. 5) and a secure host subnet 708 (e.g. the secure host subnet 508 of FIG. 5). The VCN 706 can include an LPG 710 (e.g. the LPG 510 of FIG. 5) that can be communicatively coupled to an SSH VCN 712 (e.g. the SSH VCN 512 of FIG. 5) via an LPG 710 contained in the SSH VCN 712. The SSH VCN 712 can include an SSH subnet 714 (e.g. the SSH subnet 514 of FIG. 5), and the SSH VCN 712 can be communicatively coupled to a control plane VCN 716 (e.g. the control plane VCN 516 of FIG. 5) via an LPG 710 contained in the control plane VCN 716 and to a data plane VCN 718 (e.g. the data plane 518 of FIG. 5) via an LPG 710 contained in the data plane VCN 718. The control plane VCN 716 and the data plane VCN 718 can be contained in a service tenancy 719 (e.g. the service tenancy 519 of FIG. 5).

The control plane VCN 716 can include a control plane DMZ tier 720 (e.g. the control plane DMZ tier 520 of FIG. 5) that can include load balancer (LB) subnet(s) 722 (e.g. LB subnet(s) 522 of FIG. 5), a control plane app tier 724 (e.g. the control plane app tier 524 of FIG. 5) that can include app subnet(s) 726 (e.g. similar to app subnet(s) 526 of FIG. 5), a control plane data tier 728 (e.g. the control plane data tier 528 of FIG. 5) that can include DB subnet(s) 730. The LB subnet(s) 722 contained in the control plane DMZ tier 720 can be communicatively coupled to the app subnet(s) 726 contained in the control plane app tier 724 and to an Internet gateway 734 (e.g. the Internet gateway 534 of FIG. 5) that can be contained in the control plane VCN 716, and the app subnet(s) 726 can be communicatively coupled to the DB subnet(s) 730 contained in the control plane data tier 728 and to a service gateway 736 (e.g. the service gateway of FIG. 5) and a network address translation (NAT) gateway 738 (e.g. the NAT gateway 538 of FIG. 5). The control plane VCN 716 can include the service gateway 736 and the NAT gateway 738.

The data plane VCN 718 can include a data plane app tier 746 (e.g. the data plane app tier 546 of FIG. 5), a data plane DMZ tier 748 (e.g. the data plane DMZ tier 548 of FIG. 5), and a data plane data tier 750 (e.g. the data plane data tier 550 of FIG. 5). The data plane DMZ tier 748 can include LB subnet(s) 722 that can be communicatively coupled to trusted app subnet(s) 760 and untrusted app subnet(s) 762 of the data plane app tier 746 and the Internet gateway 734 contained in the data plane VCN 718. The trusted app subnet(s) 760 can be communicatively coupled to the service gateway 736 contained in the data plane VCN 718, the NAT gateway 738 contained in the data plane VCN 718, and DB subnet(s) 730 contained in the data plane data tier 750. The untrusted app subnet(s) 762 can be communicatively coupled to the service gateway 736 contained in the data plane VCN 718 and DB subnet(s) 730 contained in the data plane data tier 750. The data plane data tier 750 can include DB subnet(s) 730 that can be communicatively coupled to the service gateway 736 contained in the data plane VCN 718.

The untrusted app subnet(s) 762 can include one or more primary VNICs 764(1)-(N) that can be communicatively coupled to tenant virtual machines (VMs) 766(1)-(N). Each tenant VM 766(1)-(N) can be communicatively coupled to a respective app subnet 767(1)-(N) that can be contained in respective container egress VCNs 768(1)-(N) that can be contained in respective customer tenancies 770(1)-(N). Respective secondary VNICs 772(1)-(N) can facilitate communication between the untrusted app subnet(s) 762 contained in the data plane VCN 718 and the app subnet contained in the container egress VCNs 768(1)-(N). Each container egress VCNs 768(1)-(N) can include a NAT gateway 738 that can be communicatively coupled to public Internet 754 (e.g. public Internet 554 of FIG. 5).

The Internet gateway 734 contained in the control plane VCN 716 and contained in the data plane VCN 718 can be communicatively coupled to a metadata management service 752 (e.g. the metadata management system 552 of FIG. 5) that can be communicatively coupled to public Internet 754. Public Internet 754 can be communicatively coupled to the NAT gateway 738 contained in the control plane VCN 716 and contained in the data plane VCN 718. The service gateway 736 contained in the control plane VCN 716 and contained in the data plane VCN 718 can be communicatively couple to cloud services 756.

In some embodiments, the data plane VCN 718 can be integrated with customer tenancies 770. This integration can be useful or desirable for customers of the IaaS provider in some cases, such as a case that may desire support when executing code. The customer may provide code to run that may be destructive, may communicate with other customer resources, or may otherwise cause undesirable effects. In response to this, the IaaS provider may determine whether to run code given to the IaaS provider by the customer.

In some examples, the customer of the IaaS provider may grant temporary network access to the IaaS provider and request a function to be attached to the data plane tier app 746. Code to run the function may be executed in the VMs 766(1)-(N), and the code may not be configured to run anywhere else on the data plane VCN 718. Each VM 766(1)-(N) may be connected to one customer tenancy 770. Respective containers 771(1)-(N) contained in the VMs 766(1)-(N) may be configured to run the code. In this case, there can be a dual isolation (e.g., the containers 771(1)-(N) running code, where the containers 771(1)-(N) may be contained in at least the VM 766(1)-(N) that are contained in the untrusted app subnet(s) 762), which may help prevent incorrect or otherwise undesirable code from damaging the network of the IaaS provider or from damaging a network of a different customer. The containers 771(1)-(N) may be communicatively coupled to the customer tenancy 770 and may be configured to transmit or receive data from the customer tenancy 770. The containers 771(1)-(N) may not be configured to transmit or receive data from any other entity in the data plane VCN 718. Upon completion of running the code, the IaaS provider may kill or otherwise dispose of the containers 771(1)-(N).

In some embodiments, the trusted app subnet(s) 760 may run code that may be owned or operated by the IaaS provider. In this embodiment, the trusted app subnet(s) 760 may be communicatively coupled to the DB subnet(s) 730 and be configured to execute CRUD operations in the DB subnet(s) 730. The untrusted app subnet(s) 762 may be communicatively coupled to the DB subnet(s) 730, but in this embodiment, the untrusted app subnet(s) may be configured to execute read operations in the DB subnet(s) 730. The containers 771(1)-(N) that can be contained in the VM 766(1)-(N) of each customer and that may run code from the customer may not be communicatively coupled with the DB subnet(s) 730.

In other embodiments, the control plane VCN 716 and the data plane VCN 718 may not be directly communicatively coupled. In this embodiment, there may be no direct communication between the control plane VCN 716 and the data plane VCN 718. However, communication can occur indirectly through at least one method. An LPG 710 may be established by the IaaS provider that can facilitate communication between the control plane VCN 716 and the data plane VCN 718. In another example, the control plane VCN 716 or the data plane VCN 718 can make a call to cloud services 756 via the service gateway 736. For example, a call to cloud services 756 from the control plane VCN 716 can include a request for a service that can communicate with the data plane VCN 718.

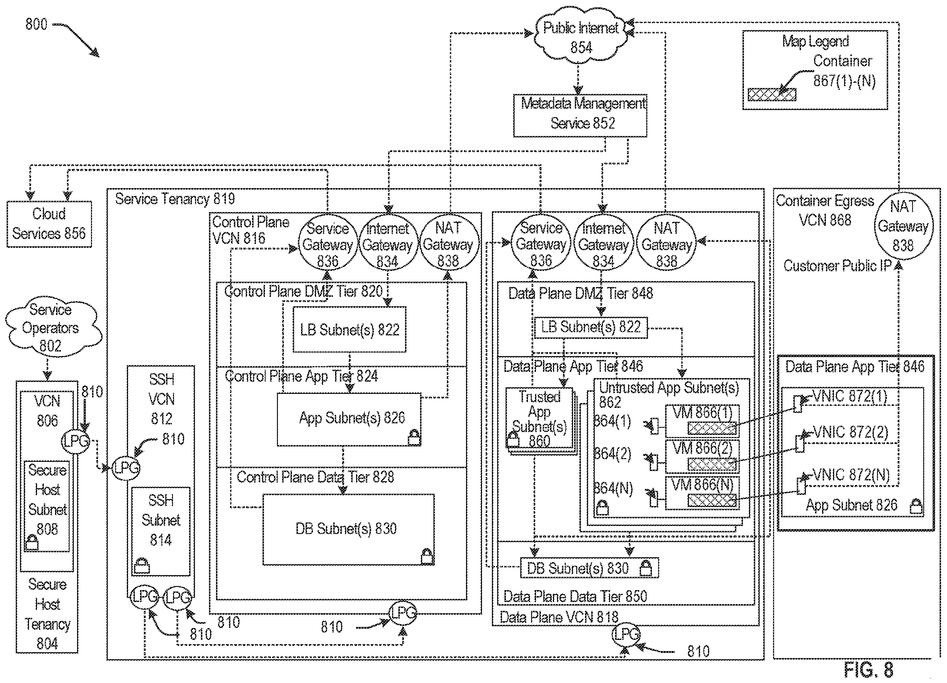

FIG. 8 is a block diagram 800 illustrating another example pattern of an IaaS architecture, according to at least one embodiment. Service operators 802 (e.g. service operators 502 of FIG. 5) can be communicatively coupled to a secure host tenancy 804 (e.g. the secure host tenancy 504 of FIG. 5) that can include a virtual cloud network (VCN) 806 (e.g. the VCN 506 of FIG. 5) and a secure host subnet 808 (e.g. the secure host subnet 508 of FIG. 5). The VCN 806 can include an LPG 810 (e.g. the LPG 510 of FIG. 5) that can be communicatively coupled to an SSH VCN 812 (e.g. the SSH VCN 512 of FIG. 5) via an LPG 810 contained in the SSH VCN 812. The SSH VCN 812 can include an SSH subnet 814 (e.g. the SSH subnet 514 of FIG. 5), and the SSH VCN 812 can be communicatively coupled to a control plane VCN 816 (e.g. the control plane VCN 516 of FIG. 5) via an LPG 810 contained in the control plane VCN 816 and to a data plane VCN 818 (e.g. the data plane 518 of FIG. 5) via an LPG 810 contained in the data plane VCN 818. The control plane VCN 816 and the data plane VCN 818 can be contained in a service tenancy 819 (e.g. the service tenancy 519 of FIG. 5).

The control plane VCN 816 can include a control plane DMZ tier 820 (e.g. the control plane DMZ tier 520 of FIG. 5) that can include LB subnet(s) 822 (e.g. LB subnet(s) 522 of FIG. 5), a control plane app tier 824 (e.g. the control plane app tier 524 of FIG. 5) that can include app subnet(s) 826 (e.g. app subnet(s) 526 of FIG. 5), a control plane data tier 828 (e.g. the control plane data tier 528 of FIG. 5) that can include DB subnet(s) 830 (e.g. DB subnet(s) 730 of FIG. 7). The LB subnet(s) 822 contained in the control plane DMZ tier 820 can be communicatively coupled to the app subnet(s) 826 contained in the control plane app tier 824 and to an Internet gateway 834 (e.g. the Internet gateway 534 of FIG. 5) that can be contained in the control plane VCN 816, and the app subnet(s) 826 can be communicatively coupled to the DB subnet(s) 830 contained in the control plane data tier 828 and to a service gateway 836 (e.g. the service gateway of FIG. 5) and a network address translation (NAT) gateway 838 (e.g. the NAT gateway 538 of FIG. 5). The control plane VCN 816 can include the service gateway 836 and the NAT gateway 838.

The data plane VCN 818 can include a data plane app tier 846 (e.g. the data plane app tier 546 of FIG. 5), a data plane DMZ tier 848 (e.g. the data plane DMZ tier 548 of FIG. 5), and a data plane data tier 850 (e.g. the data plane data tier 550 of FIG. 5). The data plane DMZ tier 848 can include LB subnet(s) 822 that can be communicatively coupled to trusted app subnet(s) 860 (e.g. trusted app subnet(s) 760 of FIG. 7) and untrusted app subnet(s) 862 (e.g. untrusted app subnet(s) 762 of FIG. 7) of the data plane app tier 846 and the Internet gateway 834 contained in the data plane VCN 818. The trusted app subnet(s) 860 can be communicatively coupled to the service gateway 836 contained in the data plane VCN 818, the NAT gateway 838 contained in the data plane VCN 818, and DB subnet(s) 830 contained in the data plane data tier 850. The untrusted app subnet(s) 862 can be communicatively coupled to the service gateway 836 contained in the data plane VCN 818 and DB subnet(s) 830 contained in the data plane data tier 850. The data plane data tier 850 can include DB subnet(s) 830 that can be communicatively coupled to the service gateway 836 contained in the data plane VCN 818.

The untrusted app subnet(s) 862 can include primary VNICs 864(1)-(N) that can be communicatively coupled to tenant virtual machines (VMs) 866(1)-(N) residing within the untrusted app subnet(s) 862. Each tenant VM 866(1)-(N) can run code in a respective container 867(1)-(N), and be communicatively coupled to an app subnet 826 that can be contained in a data plane app tier 846 that can be contained in a container egress VCN 868. Respective secondary VNICs 872(1)-(N) can facilitate communication between the untrusted app subnet(s) 862 contained in the data plane VCN 818 and the app subnet contained in the container egress VCN 868. The container egress VCN can include a NAT gateway 838 that can be communicatively coupled to public Internet 854 (e.g. public Internet 554 of FIG. 5).

The Internet gateway 834 contained in the control plane VCN 816 and contained in the data plane VCN 818 can be communicatively coupled to a metadata management service 852 (e.g. the metadata management system 552 of FIG. 5) that can be communicatively coupled to public Internet 854. Public Internet 854 can be communicatively coupled to the NAT gateway 838 contained in the control plane VCN 816 and contained in the data plane VCN 818. The service gateway 836 contained in the control plane VCN 816 and contained in the data plane VCN 818 can be communicatively couple to cloud services 856.

In some examples, the pattern illustrated by the architecture of block diagram 800 of FIG. 8 may be considered an exception to the pattern illustrated by the architecture of block diagram 600 of FIG. 6 and may be desirable for a customer of the IaaS provider if the IaaS provider cannot directly communicate with the customer (e.g., a disconnected region). The respective containers 867(1)-(N) that are contained in the VMs 866(1)-(N) for each customer can be accessed in real-time by the customer. The containers 867(1)-(N) may be configured to make calls to respective secondary VNICs 872(1)-(N) contained in app subnet(s) 826 of the data plane app tier 846 that can be contained in the container egress VCN 868. The secondary VNICs 872(1)-(N) can transmit the calls to the NAT gateway 838 that may transmit the calls to public Internet 854. In this example, the containers 867(1)-(N) that can be accessed in real-time by the customer can be isolated from the control plane VCN 816 and can be isolated from other entities contained in the data plane VCN 818. The containers 867(1)-(N) may also be isolated from resources from other customers.

In other examples, the customer can use the containers 867(1)-(N) to call cloud services 856. In this example, the customer may run code in the containers 867(1)-(N) that requests a service from cloud services 856. The containers 867(1)-(N) can transmit this request to the secondary VNICs 872(1)-(N) that can transmit the request to the NAT gateway that can transmit the request to public Internet 854. Public Internet 854 can transmit the request to LB subnet(s) 822 contained in the control plane VCN 816 via the Internet gateway 834. In response to determining the request is valid, the LB subnet(s) can transmit the request to app subnet(s) 826 that can transmit the request to cloud services 856 via the service gateway 836.

It should be appreciated that IaaS architectures 500, 600, 700, 800 depicted in the figures may have other components than those depicted. Further, the embodiments shown in the figures are only some examples of a cloud infrastructure system that may incorporate an embodiment of the disclosure. In some other embodiments, the IaaS systems may have more or fewer components than shown in the figures, may combine two or more components, or may have a different configuration or arrangement of components.

In certain embodiments, the IaaS systems described herein may include a suite of applications, middleware, and database service offerings that are delivered to a customer in a self-service, subscription-based, elastically scalable, reliable, highly available, and secure manner. An example of such an IaaS system is the Oracle Cloud Infrastructure (OCI) provided by the present assignee.

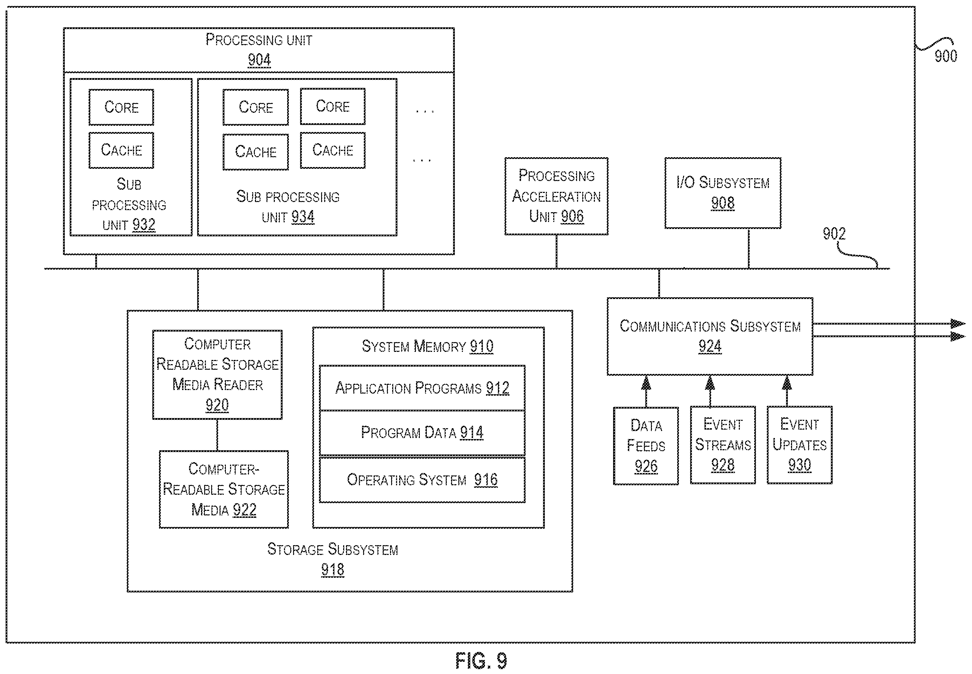

FIG. 9 illustrates an example computer system 900, in which various embodiments may be implemented. The system 900 may be used to implement any of the computer systems described above. As shown in the figure, computer system 900 includes a processing unit 904 that communicates with a number of peripheral subsystems via a bus subsystem 902. These peripheral subsystems may include a processing acceleration unit 906, an I/O subsystem 908, a storage subsystem 918 and a communications subsystem 924. Storage subsystem 918 includes tangible computer-readable storage media 922 and a system memory 910.

Bus subsystem 902 provides a mechanism for letting the various components and subsystems of computer system 900 communicate with each other as intended. Although bus subsystem 902 is shown schematically as a single bus, alternative embodiments of the bus subsystem may utilize multiple buses. Bus subsystem 902 may be any of several types of bus structures including a memory bus or memory controller, a peripheral bus, and a local bus using any of a variety of bus architectures. For example, such architectures may include an Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus, which can be implemented as a Mezzanine bus manufactured to the IEEE P1386.1 standard.

Processing unit 904, which can be implemented as one or more integrated circuits (e.g., a conventional microprocessor or microcontroller), controls the operation of computer system 900. One or more processors may be included in processing unit 904. These processors may include single core or multicore processors. In certain embodiments, processing unit 904 may be implemented as one or more independent processing units 932 and/or 934 with single or multicore processors included in each processing unit. In other embodiments, processing unit 904 may also be implemented as a quad-core processing unit formed by integrating two dual-core processors into a single chip.

In various embodiments, processing unit 904 can execute a variety of programs in response to program code and can maintain multiple concurrently executing programs or processes. At any given time, some or all of the program code to be executed can be resident in processor(s) 904 and/or in storage subsystem 918. Through suitable programming, processor(s) 904 can provide various functionalities described above. Computer system 900 may additionally include a processing acceleration unit 906, which can include a digital signal processor (DSP), a special-purpose processor, and/or the like.

I/O subsystem 908 may include user interface input devices and user interface output devices. User interface input devices may include a keyboard, pointing devices, such as a mouse or trackball, a touchpad or touch screen incorporated into a display, a scroll wheel, a click wheel, a dial, a button, a switch, a keypad, audio input devices with voice command recognition systems, microphones, and other types of input devices. User interface input devices may include, for example, motion sensing and/or gesture recognition devices, such as the Microsoft Kinect^{®} motion sensor that enables users to control and interact with an input device, such as the Microsoft Xbox^{®} 360 game controller, through a natural user interface using gestures and spoken commands. User interface input devices may also include eye gesture recognition devices, such as the Google Glass^{®} blink detector that detects eye activity (e.g., 'blinking' while taking pictures and/or making a menu selection) from users and transforms the eye gestures as input into an input device (e.g., Google Glass^{®}). Additionally, user interface input devices may include voice recognition sensing devices that enable users to interact with voice recognition systems (e.g., Siri^{®} navigator), through voice commands.

User interface input devices may also include, without limitation, three dimensional (3D) mice, joysticks or pointing sticks, gamepads and graphic tablets, and audio/visual devices, such as speakers, digital cameras, digital camcorders, portable media players, webcams, image scanners, fingerprint scanners, barcode reader 3D scanners, 3D printers, laser rangefinders, and eye gaze tracking devices. Additionally, user interface input devices may include, for example, medical imaging input devices, such as computed tomography, magnetic resonance imaging, position emission tomography, medical ultrasonography devices. User interface input devices may also include, for example, audio input devices, such as MIDI keyboards, digital musical instruments and the like.

User interface output devices may include a display subsystem, indicator lights, or non-visual displays, such as audio output devices. The display subsystem may be a cathode ray tube (CRT), a flat-panel device, such as that using a liquid crystal display (LCD) or plasma display, a projection device, a touch screen, and the like. In general, use of the term "output device" is intended to include all possible types of devices and mechanisms for outputting information from computer system 900 to a user or other computer. For example, user interface output devices may include, without limitation, a variety of display devices that visually convey text, graphics and audio/video information, such as monitors, printers, speakers, headphones, automotive navigation systems, plotters, voice output devices, and modems.

Computer system 900 may comprise a storage subsystem 918 that comprises software elements, shown as being currently located within a system memory 910. System memory 910 may store program instructions that are loadable and executable on processing unit 904, as well as data generated during the execution of these programs.

Depending on the configuration and type of computer system 900, system memory 910 may be volatile (such as random-access memory (RAM)) and/or non-volatile (such as read-only memory (ROM), flash memory) The RAM typically contains data and/or program modules that are immediately accessible to and/or presently being operated and executed by processing unit 904. In some implementations, system memory 910 may include multiple different types of memory, such as static random-access memory (SRAM) or dynamic random-access memory (DRAM). In some implementations, a basic input/output system (BIOS), containing the basic routines that help to transfer information between elements within computer system 900, such as during start-up, may typically be stored in the ROM. By way of example, and not limitation, system memory 910 also illustrates application programs 912, which may include client applications, Web browsers, mid-tier applications, relational database management systems (RDBMS), etc., program data 914, and an operating system 916. By way of example, operating system 916 may include various versions of Microsoft Windows^{®}, Apple Macintosh^{®}, and/or Linux operating systems, a variety of commercially-available UNIX^{®} or UNIX-like operating systems (including without limitation the variety of GNU/Linux operating systems, the Google Chrome^{®} OS, and the like) and/or mobile operating systems, such as iOS, Windows^{®} Phone, Android^{®} OS, BlackBerry^{®} 10 OS, and Palm^{®} OS operating systems.

Storage subsystem 918 may also provide a tangible computer-readable storage medium for storing the basic programming and data constructs that provide the functionality of some embodiments. Software (programs, code modules, instructions) that when executed by a processor provide the functionality described above may be stored in storage subsystem 918. These software modules or instructions may be executed by processing unit 904. Storage subsystem 918 may also provide a repository for storing data used in accordance with the present disclosure.

Storage subsystem 900 may also include a computer-readable storage media reader 920 that can further be connected to computer-readable storage media 922. Together and, optionally, in combination with system memory 910, computer-readable storage media 922 may comprehensively represent remote, local, fixed, and/or removable storage devices plus storage media for temporarily and/or more permanently containing, storing, transmitting, and retrieving computer-readable information.

Computer-readable storage media 922 containing code, or portions of code, can also include any appropriate media known or used in the art, including storage media and communication media, such as, but not limited to, volatile and non-volatile, removable and non-removable media implemented in any method or technology for storage and/or transmission of information. This can include tangible computer-readable storage media, such as RAM, ROM, electronically erasable programmable ROM (EEPROM), flash memory or other memory technology, CD-ROM, digital versatile disk (DVD), or other optical storage, magnetic cassettes, magnetic tape, magnetic disk storage or other magnetic storage devices, or other tangible computer-readable media. This can also include nontangible computer-readable media, such as data signals, data transmissions, or any other medium which can be used to transmit the desired information and which can be accessed by computing system 900.

By way of example, computer-readable storage media 922 may include a hard disk drive that reads from or writes to non-removable, nonvolatile magnetic media, a magnetic disk drive that reads from or writes to a removable, nonvolatile magnetic disk, and an optical disk drive that reads from or writes to a removable, nonvolatile optical disk, such as a CD ROM, DVD, and Blu-Ray^{®} disk, or other optical media. Computer-readable storage media 922 may include, but is not limited to, Zip^{®} drives, flash memory cards, universal serial bus (USB) flash drives, secure digital (SD) cards, DVD disks, digital video tape, and the like. Computer-readable storage media 922 may also include, solid-state drives (SSD) based on non-volatile memory, such as flash-memory based SSDs, enterprise flash drives, solid state ROM, and the like, SSDs based on volatile memory, such as solid state RAM, dynamic RAM, static RAM, DRAM-based SSDs, magnetoresistive RAM (MRAM) SSDs, and hybrid SSDs that use a combination of DRAM and flash memory based SSDs. The disk drives and their associated computer-readable media may provide non-volatile storage of computer-readable instructions, data structures, program modules, and other data for computer system 900.

Communications subsystem 924 provides an interface to other computer systems and networks. Communications subsystem 924 serves as an interface for receiving data from and transmitting data to other systems from computer system 900. For example, communications subsystem 924 may enable computer system 1000 to connect to one or more devices via the Internet. In some embodiments communications subsystem 924 can include radio frequency (RF) transceiver components for accessing wireless voice and/or data networks (e.g., using cellular telephone technology, advanced data network technology, such as 3G, 4G or EDGE (enhanced data rates for global evolution), WiFi (IEEE 802.11 family standards, or other mobile communication technologies, or any combination thereof), global positioning system (GPS) receiver components, and/or other components. In some embodiments communications subsystem 924 can provide wired network connectivity (e.g., Ethernet) in addition to or instead of a wireless interface.

In some embodiments, communications subsystem 924 may also receive input communication in the form of structured and/or unstructured data feeds 926, event streams 928, event updates 930, and the like on behalf of one or more users who may use computer system 900.

By way of example, communications subsystem 924 may be configured to receive data feeds 926 in real-time from users of social networks and/or other communication services, such as Twitter^{®} feeds, Facebook^{®} updates, web feeds, such as Rich Site Summary (RSS) feeds, and/or real-time updates from one or more third party information sources.

Additionally, communications subsystem 924 may also be configured to receive data in the form of continuous data streams, which may include event streams 928 of real-time events and/or event updates 930, that may be continuous or unbounded in nature with no explicit end. Examples of applications that generate continuous data may include, for example, sensor data applications, financial tickers, network performance measuring tools (e.g. network monitoring and traffic management applications), clickstream analysis tools, automobile traffic monitoring, and the like.

Communications subsystem 924 may also be configured to output the structured and/or unstructured data feeds 926, event streams 928, event updates 930, and the like to one or more databases that may be in communication with one or more streaming data source computers coupled to computer system 900.

Computer system 900 can be one of various types, including a handheld portable device (e.g., an iPhone^{®} cellular phone, an iPad^{®} computing tablet, a PDA), a wearable device (e.g., a Google Glass^{®} head mounted display), a PC, a workstation, a mainframe, a kiosk, a server rack, or any other data processing system.

Due to the ever-changing nature of computers and networks, the description of computer system 900 depicted in the figure is intended only as a specific example. Many other configurations having more or fewer components than the system depicted in the figure are possible. For example, customized hardware might also be used and/or particular elements might be implemented in hardware, firmware, software (including applets), or a combination. Further, connection to other computing devices, such as network input/output devices, may be employed. Based on the disclosure and teachings provided herein, a person of ordinary skill in the art will appreciate other ways and/or methods to implement the various embodiments.

Embodiments are not restricted to operation within certain specific data processing environments, but are free to operate within a plurality of data processing environments. Additionally, although embodiments have been described using a particular series of transactions and steps, it should be apparent to those skilled in the art that the scope of the present disclosure is not limited to the described series of transactions and steps. Various features and aspects of the above-described embodiments may be used individually or jointly.

Further, while embodiments have been described using a particular combination of hardware and software, it should be recognized that other combinations of hardware and software are also within the scope of the present disclosure. Embodiments may be implemented only in hardware, or only in software, or using combinations thereof. The various processes described herein can be implemented on the same processor or different processors in any combination. Accordingly, where components or modules are described as being configured to perform certain operations, such configuration can be accomplished, e.g., by designing electronic circuits to perform the operation, by programming programmable electronic circuits (such as microprocessors) to perform the operation, or any combination thereof. Processes can communicate using a variety of techniques including but not limited to conventional techniques for inter process communication, and different pairs of processes may use different techniques, or the same pair of processes may use different techniques at different times.

The specification and drawings are, accordingly, to be regarded in an illustrative rather than a restrictive sense. Thus, although specific disclosure embodiments have been described, these are not intended to be limiting. Various modifications and equivalents are within the scope of the following claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments and does not pose a limitation on the scope of the disclosure unless otherwise claimed. No language in the specification should be construed as indicating any non-claimed element as essential to the practice of the disclosure.

Disjunctive language such as the phrase "at least one of X, Y, or Z," unless specifically stated otherwise, is intended to be understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Preferred embodiments of this disclosure are described herein, including the best mode known for carrying out the disclosure. Variations of those preferred embodiments may become apparent to those of ordinary skill in the art upon reading the foregoing description. Those of ordinary skill should be able to employ such variations as appropriate and the disclosure may be practiced otherwise than as specifically described herein.

In the foregoing specification, aspects of the disclosure are described with reference to specific embodiments thereof, but those skilled in the art will recognize that the disclosure is not limited thereto. Various features and aspects of the above-described disclosure may be used individually or jointly. The specification and drawings are, accordingly, to be regarded as illustrative rather than restrictive.

## Claims

1. A method comprising:
generating (401) an integrated identity and access management, IAM, system from a first IAM system and a second IAM system that is different than the first IAM system by: (i) creating (401A) a domain (206, 216, 226) in a customer tenancy (200) associated with the first IAM system, and (ii) embedding (401B) an identity provider of the second IAM system within the domain;
receiving (403), by the integrated IAM system, a request from a user to perform an operation with respect to resource associated with the second IAM system; and
executing (405) the request in response to the user being successfully authenticated by the integrated IAM system.

2. The method of claim 1, wherein the domain is created in a compartment (205, 215, 225) of the customer tenancy, preferably wherein the compartment is associated with a policy (207, 217, 227) corresponding to one or more rules governing access to resources by the user.

3. The method of claim 1, further comprising:
creating a plurality of domains in the customer tenancy, each of which corresponds to a stripe of the second IAM system, wherein the stripe corresponds to a container including one or more users, preferably where each of the plurality of domains is associated with a corresponding policy.

4. The method of claim 1, wherein a control plane of the integrated IAM system comprises: (i) a first end-point configured to receive requests pertaining to creation of new domains, and (ii) a plurality of second end-points, each of which corresponds to a previously created domain and configured to receive pertaining to operations to be performed in the domain.

5. The method of claim 1, further comprising:
registering an application to the domain;
creating a dynamic group of one or more resource principals; and
allocating the dynamic group of one or more resource principals to the application.

6. The method of claim 1, further comprising:
provisioning a default domain in the customer tenancy, the default domain including a first user that created the customer tenancy, the default domain being associated with a default policy that provides access within the customer tenancy to the first user .

7. The method of claim 1, wherein the request is processed by a network source determiner, NSD, disposed in the customer tenancy, the NSD being configured to determine a source of the request and wherein the method further comprises executing the request responsive to a successful identification of the source of the request, or wherein the request is executed without federating the first IAM system with the second IAM system.

8. A non-transitory computer-readable medium storing specific computer-executable instructions that, when executed by a processor, cause a computer system to execute a method, the method comprising:
generating (401) an integrated identity and access management, IAM, system from a first IAM system and a second IAM system that is different than the first IAM system by: (i) creating (401A) a domain (206, 216, 226) in a customer tenancy (200) associated with the first IAM system, and (ii) embedding (401B) an identity provider of the second IAM system within the domain;
receiving (403), by the integrated IAM system, a request from a user to perform an operation with respect to resource associated with the second IAM system; and
executing (405) the request in response to the user being successfully authenticated by the integrated IAM system.

9. The non-transitory computer-readable medium of claim 8, wherein the domain is created in a compartment (205, 215, 225) of the customer tenancy, preferably wherein the compartment is associated with a policy (207, 217, 227) corresponding to one or more rules governing access to resources by the user.

10. The non-transitory computer-readable medium of claim 8, wherein the method further comprises:
creating a plurality of domains in the customer tenancy, each of which corresponds to a stripe of the second IAM system, wherein the stripe corresponds to a container including one or more users.

11. The non-transitory computer-readable medium of claim 8, wherein a control plane of the integrated IAM system comprises: (i) a first end-point configured to receive requests pertaining to creation of new domains, and (ii) a plurality of second end-points, each of which corresponds to a previously created domain and configured to receive pertaining to operations to be performed in the domain.

12. The non-transitory computer-readable medium of claim 8, wherein the method further comprises:
registering an application to the domain;
creating a dynamic group of one or more resource principals; and
allocating the dynamic group of one or more resource principals to the application.

13. The non-transitory computer-readable medium of claim 8, wherein the request is processed by a network source determiner, NSD, disposed in the customer tenancy, the NSD being configured to determine a source of the request and wherein the method further comprises executing the request responsive to a successful identification of the source of the request, or wherein the request is executed without federating the first IAM system with the second IAM system.

14. A computing device comprising:
a processor; and
a memory including instructions that, when executed with the processor, cause the computing device to, at least:
generate (401) an integrated identity and access management (IAM) system from a first IAM system and a second IAM system that is different than the first IAM system by: (i) creating (401A) a domain in a customer tenancy (200) associated with the first IAM system, and (ii) embedding (401B) an identity provider of the second IAM system within the domain;
receive (403), by the integrated IAM system, a request from a user to perform an operation with respect to resource associated with the second IAM system; and
execute (405) the request in response to the user being successfully authenticated by the integrated IAM system.

15. The computing device of claim 14, wherein the request is executed without federating the first IAM system with the second IAM system.

## Patentansprüche

1. Verfahren, umfassend:
Erzeugen (401) eines integrierten Identitäts- und Zugriffsmanagement-, IAM, - systems aus einem ersten IAM-System und einem zweiten IAM-System, das sich von dem ersten IAM-System unterscheidet, durch: (i) Kreieren (401A) einer Domain (206, 216, 226) in einem mit dem ersten IAM-System assoziierten Kundenmandat (200), und (ii) Einbetten (401B) eines Identitätsanbieters des zweiten IAM-Systems innerhalb der Domain;
Empfangen (403), durch das integrierte IAM-System, einer Anforderung von einem Benutzer, eine Operation in Bezug auf eine mit dem zweiten IAM-System assoziierte Ressource durchzuführen; und
Ausführen (405) der Anforderung als Antwort auf eine erfolgreiche Authentifizierung des Benutzers durch das integrierte IAM-System.

2. Verfahren nach Anspruch 1, wobei die Domain in einem Compartment (205, 215, 225) des Kundenmandats kreiert wird, vorzugsweise wobei das Compartment mit einer Policy (207, 217, 227) assoziiert ist, die einer oder mehreren Regeln entspricht, die den Zugriff auf Ressourcen durch den Benutzer regeln.

3. Verfahren nach Anspruch 1, weiter umfassend:
Kreieren einer Vielzahl von Domains in dem Kundenmandat, von denen jede einem Stripe des zweiten IAM-Systems entspricht, wobei der Stripe einem Container entspricht, der einen oder mehrere Benutzer einschließt, wobei vorzugsweise jede der Vielzahl von Domains mit einer entsprechenden Policy assoziiert ist.

4. Verfahren nach Anspruch 1, wobei eine Steuerebene des integrierten IAM-Systems Folgendes umfasst: (i) einen ersten Endpunkt, der konfiguriert ist, um Anforderungen zu empfangen, die sich auf die Kreierung neuer Domains beziehen, und (ii) eine Vielzahl von zweiten Endpunkten, von denen jeder einer zuvor kreierten Domain entspricht und konfiguriert ist, um Anforderungen zu empfangen, die sich auf Operationen beziehen, die in der Domain durchzuführen sind.

5. Verfahren nach Anspruch 1, weiter umfassend:
Registrieren einer Anwendung in der Domain;
Kreieren einer dynamischen Gruppe von einem oder mehreren Ressourcenprinzipien; und
Zuweisen der dynamischen Gruppe von einem oder mehreren Ressourcenprinzipien an die Anwendung.

6. Verfahren nach Anspruch 1, weiter umfassend:
Bereitstellen einer Standarddomain in dem Kundenmandat, wobei die Standarddomain einen ersten Benutzer einschließt, der das Kundenmandat kreiert hat, wobei die Standarddomain mit einer Standardpolicy assoziiert ist, die dem ersten Benutzer Zugang innerhalb des Kundenmandats bereitstellt.

7. Verfahren nach Anspruch 1, wobei die Anforderung von einem in dem Kundenmandat angeordneten Netzwerkquellenbestimmer, NSD, verarbeitet wird, wobei der NSD konfiguriert ist, um eine Quelle der Anforderung zu bestimmen und wobei das Verfahren weiter Ausführen der Anforderung als Antwort auf eine erfolgreiche Identifizierung der Quelle der Anforderung umfasst, oder wobei die Anforderung ausgeführt wird, ohne das erste IAM-System mit dem zweiten IAM-System zu föderieren.

8. Nicht transitorisches computerlesbares Medium, das spezifische computerausführbare Anweisungen speichert, die, wenn sie von einem Prozessor ausgeführt werden, ein Computersystem veranlassen, ein Verfahren auszuführen, wobei das Verfahren Folgendes umfasst:
Erzeugen (401) eines integrierten Identitäts- und Zugriffsmanagement-, IAM, - systems aus einem ersten IAM-System und einem zweiten IAM-System, das sich von dem ersten IAM-System unterscheidet, durch: (i) Kreieren (401A) einer Domain (206, 216, 226) in einem mit dem ersten IAM-System assoziierten Kundenmandat (200), und (ii) Einbetten (401B) eines Identitätsanbieters des zweiten IAM-Systems innerhalb der Domain;
Empfangen (403), durch das integrierte IAM-System, einer Anforderung von einem Benutzer, eine Operation in Bezug auf eine mit dem zweiten IAM-System assoziierte Ressource durchzuführen; und
Ausführen (405) der Anforderung als Antwort auf eine erfolgreiche Authentifizierung des Benutzers durch das integrierte IAM-System.

9. Nicht transitorisches computerlesbares Medium nach Anspruch 8, wobei die Domain in einem Compartment (205, 215, 225) des Kundenmandats kreiert wird, vorzugsweise wobei das Compartment mit einer Policy (207, 217, 227) assoziiert ist, die einer oder mehreren Regeln entspricht, die den Zugriff auf Ressourcen durch den Benutzer regeln.

10. Nicht transitorisches computerlesbares Medium nach Anspruch 8, wobei das Verfahren weiter Folgendes umfasst:
Kreieren einer Vielzahl von Domains in dem Kundenmandat, von denen jede einem Stripe des zweiten IAM-Systems entspricht, wobei der Stripe einem Container entspricht, der einen oder mehrere Benutzer einschließt.

11. Nicht transitorisches computerlesbares Medium nach Anspruch 8, wobei eine Steuerebene des integrierten IAM-Systems Folgendes umfasst: (i) einen ersten Endpunkt, der konfiguriert ist, um Anforderungen zu empfangen, die sich auf die Kreierung neuer Domains beziehen, und (ii) eine Vielzahl von zweiten Endpunkten, von denen jeder einer zuvor kreierten Domain entspricht und konfiguriert ist, um Anforderungen zu empfangen, die sich auf Operationen beziehen, die in der Domain durchzuführen sind.

12. Nicht transitorisches computerlesbares Medium nach Anspruch 8, wobei das Verfahren weiter Folgendes umfasst:
Registrieren einer Anwendung in der Domain;
Kreieren einer dynamischen Gruppe von einem oder mehreren Ressourcenprinzipien; und
Zuweisen der dynamischen Gruppe von einem oder mehreren Ressourcenprinzipien an die Anwendung.

13. Nicht transitorisches computerlesbares Medium nach Anspruch 8, wobei die Anforderung von einem in dem Kundenmandat angeordneten Netzwerkquellenbestimmer, NSD, verarbeitet wird, wobei der NSD konfiguriert ist, um eine Quelle der Anforderung zu bestimmen und wobei das Verfahren weiter Ausführen der Anforderung als Antwort auf eine erfolgreiche Identifizierung der Quelle der Anforderung umfasst, oder wobei die Anforderung ausgeführt wird, ohne das erste IAM-System mit dem zweiten IAM-System zu föderieren.

14. Rechenvorrichtung, umfassend: einen Prozessor; und
einen Speicher, der Anweisungen einschließt, die, wenn sie mit dem Prozessor ausgeführt werden, die Rechenvorrichtung mindestens zu Folgendem veranlassen:
Erzeugen (401) eines integrierten Identitäts- und Zugriffsmanagement- (IAM) - systems aus einem ersten IAM-System und einem zweiten IAM-System, das sich von dem ersten IAM-System unterscheidet, durch: (i) Kreieren (401A) einer Domain in einem mit dem ersten IAM-System assoziierten Kundenmandat (200), und (ii) Einbetten (401B) eines Identitätsanbieters des zweiten IAM-Systems innerhalb der Domain;
Empfangen (403), durch das integrierte IAM-System, einer Anforderung von einem Benutzer, eine Operation in Bezug auf eine mit dem zweiten IAM-System assoziierte Ressource durchzuführen; und
Ausführen (405) der Anforderung als Antwort auf eine erfolgreiche Authentifizierung des Benutzers durch das integrierte IAM-System.

15. Rechenvorrichtung nach Anspruch 14, wobei die Anforderung ausgeführt wird, ohne das erste IAM-System mit dem zweiten IAM-System zu föderieren.

## Revendications

1. Procédé comprenant :
la génération (401) d'un système de gestion d'identité et d'accès, IAM, intégré à partir d'un premier système IAM et d'un second système IAM qui est différent du premier système IAM par : (i) la création (401A) d'un domaine (206, 216, 226) dans une location client (200) associée au premier système IAM, et (ii) l'incorporation (401B) d'un fournisseur d'identité du second système IAM dans le domaine ;
la réception (403), par le système IAM intégré, d'une demande en provenance d'un utilisateur pour mettre en œuvre une opération par rapport à une ressource associée au second système IAM ; et
l'exécution (405) de la demande en réponse à l'authentification réussie de l'utilisateur par le système IAM intégré.

2. Procédé selon la revendication 1, dans lequel le domaine est créé dans un compartiment (205, 215, 225) de la location client, de préférence dans lequel le compartiment est associé à une politique (207, 217, 227) correspondant à une ou plusieurs règles régissant l'accès à des ressources par l'utilisateur.

3. Procédé selon la revendication 1, comprenant en outre :
la création d'une pluralité de domaines dans la location client, dont chacun correspond à une bande du second système IAM, dans lequel la bande correspond à un conteneur incluant un ou plusieurs utilisateurs, de préférence où chacun de la pluralité de domaines est associé à une politique correspondante.

4. Procédé selon la revendication 1, dans lequel un plan de commande du système IAM intégré comprend : (i) un premier point d'extrémité configuré pour recevoir des demandes concernant la création de nouveaux domaines, et (ii) une pluralité de seconds points d'extrémité, dont chacun correspond à un domaine précédemment créé et configurés pour recevoir des opérations à mettre en œuvre dans le domaine.

5. Procédé selon la revendication 1, comprenant en outre :
l'enregistrement d'une application dans le domaine ;
la création d'un groupe dynamique d'un ou plusieurs principes de ressource ; et
l'attribution du groupe dynamique d'un ou plusieurs principes de ressource à l'application.

6. Procédé selon la revendication 1, comprenant en outre :
la fourniture d'un domaine par défaut dans la location client, le domaine par défaut incluant un premier utilisateur qui a créé la location client, le domaine par défaut étant associé à une politique par défaut qui fournit un accès à l'intérieur de la location client au premier utilisateur.

7. Procédé selon la revendication 1, dans lequel la demande est traitée par un déterminateur de source de réseau, NSD, disposé dans la location client, le NSD étant configuré pour déterminer une source de la demande et dans lequel le procédé comprend en outre l'exécution de la demande en réponse à une identification réussie de la source de la demande, ou dans lequel la demande est exécutée sans fédérer le premier système IAM avec le second système IAM.

8. Support non transitoire lisible par ordinateur stockant des instructions exécutables par ordinateur spécifiques qui, lorsqu'elles sont exécutées par un processeur, amènent un système informatique à exécuter un procédé, le procédé comprenant :
la génération (401) d'un système de gestion d'identité et d'accès, IAM, intégré à partir d'un premier système IAM et d'un second système IAM qui est différent du premier système IAM par : (i) la création (401A) d'un domaine (206, 216, 226) dans une location client (200) associée au premier système IAM, et (ii) l'incorporation (401B) d'un fournisseur d'identité du second système IAM dans le domaine ;
la réception (403), par le système IAM intégré, d'une demande en provenance d'un utilisateur pour mettre en œuvre une opération par rapport à une ressource associée au second système IAM ; et
l'exécution (405) de la demande en réponse à l'authentification réussie de l'utilisateur par le système IAM intégré.

9. Support non transitoire lisible par ordinateur selon la revendication 8, dans lequel le domaine est créé dans un compartiment (205, 215, 225) de la location client, de préférence dans lequel le compartiment est associé à une politique (207, 217, 227) correspondant à une ou plusieurs règles régissant l'accès à des ressources par l'utilisateur.

10. Support non transitoire lisible par ordinateur selon la revendication 8, dans lequel le procédé comprend en outre :
la création d'une pluralité de domaines dans la location client, dont chacun correspond à une bande du second système IAM, dans lequel la bande correspond à un conteneur incluant un ou plusieurs utilisateurs.

11. Support non transitoire lisible par ordinateur selon la revendication 8, dans lequel un plan de commande du système IAM intégré comprend : (i) un premier point d'extrémité configuré pour recevoir des demandes concernant la création de nouveaux domaines, et (ii) une pluralité de seconds points d'extrémité, dont chacun correspond à un domaine précédemment créé et configurés pour recevoir des opérations à mettre en œuvre dans le domaine.

12. Support non transitoire lisible par ordinateur selon la revendication 8, dans lequel le procédé comprend en outre :
l'enregistrement d'une application dans le domaine ;
la création d'un groupe dynamique d'un ou plusieurs principes de ressource ; et
l'attribution du groupe dynamique d'un ou plusieurs principes de ressource à l'application.

13. Support non transitoire lisible par ordinateur selon la revendication 8, dans lequel la demande est traitée par un déterminateur de source de réseau, NSD, disposé dans la location client, le NSD étant configuré pour déterminer une source de la demande et dans lequel le procédé comprend en outre l'exécution de la demande en réponse à une identification réussie de la source de la demande, ou dans lequel la demande est exécutée sans fédérer le premier système IAM avec le second système IAM.

14. Dispositif informatique comprenant : un processeur ; et
une mémoire incluant des instructions qui, lorsqu'elles sont exécutées avec le processeur, amènent le dispositif informatique à, au moins :
générer (401) un système de gestion d'identité et d'accès (IAM) intégré à partir d'un premier système IAM et d'un second système IAM qui est différent du premier système IAM par : (i) la création (401A) d'un domaine dans une location client (200) associée au premier système IAM, et (ii) l'incorporation (401B) d'un fournisseur d'identité du second système IAM dans le domaine ;
recevoir (403), par le système IAM intégré, une demande en provenance d'un utilisateur pour mettre en œuvre une opération par rapport à une ressource associée au second système IAM ; et
exécuter (405) la demande en réponse à l'authentification réussie de l'utilisateur par le système IAM intégré.

15. Dispositif informatique selon la revendication 14, dans lequel la demande est exécutée sans fédérer le premier système IAM avec le second système IAM.
